(19) Europäisches Patentamt / European Patent Office / Office européen des brevets

(11) **EP 4 233 078 B1**

(12) **EUROPEAN PATENT SPECIFICATION**

(45) Date of publication and mention of the grant of the patent:
**06.05.2026 Bulletin 2026/19**

(21) Application number: **21793956.0**

(22) Date of filing: **21.10.2021**

(51) International Patent Classification (IPC):
***H01B 3/00*** *(2006.01)* ***H01B 3/46*** *(2006.01)*
***C08L 83/04*** *(2006.01)* ***C08K 3/36*** *(2006.01)*
***C08K 3/04*** *(2006.01)* ***C09K 5/14*** *(2006.01)*
***C08L 83/00*** *(2006.01)* ***H02G 15/064*** *(2006.01)*
***H02G 15/103*** *(2006.01)* ***H02G 15/184*** *(2006.01)*
***C08J 3/22*** *(2006.01)* ***C08G 77/12*** *(2006.01)*
***C08G 77/20*** *(2006.01)*

(52) Cooperative Patent Classification (CPC):
(C-Sets available)
**H01B 3/006; C08J 3/226; C08K 3/04; C08L 83/04; H01B 3/46;** C08G 77/12; C08G 77/20; C08J 2383/04; C08J 2483/04; H02G 15/064; H02G 15/103; H02G 15/184 (Cont.)

(86) International application number:
**PCT/EP2021/079174**

(87) International publication number:
**WO 2022/084434 (28.04.2022 Gazette 2022/17)**

(54) **NON-CURABLE SILICONE COMPOSITION COMPRISING CARBON BLACK**

NICHTHÄRTBARE SILIKONZUSAMMENSETZUNG MIT RUSS

COMPOSITION DE SILICONE NON DURCISSABLE COMPRENANT DU NOIR DE CARBONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.10.2020 EP 20203115**

(43) Date of publication of application:
**30.08.2023 Bulletin 2023/35**

(73) Proprietor: **Momentive Performance Materials GmbH**
**51368 Leverkusen (DE)**

(72) Inventors:
- **SAFAROWSKY, Oliver**
  **51107 Köln (DE)**
- **ERDMANN, Olaf**
  **51469 Bergisch Gladbach (DE)**
- **HAEUSER, Thorsten**
  **51467 Bergisch Gladbach (DE)**

(74) Representative: **Gille Hrabal Partnerschaftsgesellschaft mbB**
**Patentanwälte**
**Brucknerstraße 20**
**40593 Düsseldorf (DE)**

(56) References cited:
**WO-A1-2016/110570**
**WO-A1-2020/063799**
**WO-A2-2005/036563**
**WO-A2-2009/027133**
**US-A- 3 814 730**
**US-A1- 2004 138 370**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 3/04, C08L 83/04;**
**C08L 83/04, C08L 83/00, C08L 83/00, C08L 83/00, C08L 83/00, C08L 83/00, C08K 5/56, C08K 3/04**

## Description

The present invention relates to a process for the manufacture of a non-curable silicone composition comprising carbon black, the non-curable silicone composition obtained by the process and its use for the manufacture of curable silicone compositions in particular for use in high voltage direct current applications.

Standard silicones are widely used in high voltage (HV) industry for alternating current (AC). However, the use of those materials fails in the emerging trend for direct current (DC) application. The use of carbon black (CB) as filler material provides an advantageous property to the silicone with positive tests up to 325 kV working voltage with a standard CB paste which is established for many years. This standard CB paste is produced via three roll mill technology or a twin blade kneader (US20170372815A1).

The present inventors found out, however, that there are limitations at higher voltages of up to 500 kV, by causing breakdowns of the modified silicone system.

Also, the current conductive liquid silicone rubbers (LSR) are very limited in variation of mechanical properties and have in some cases insufficient electrical conductivity.

Silicone compositions comprising carbon black as filler are for example disclosed in the following documents of the state of the art:

WO2016/110570 and US20170372815A1, respectively, disclose the use of a silicone composition comprising

a) at least one polyorganopolysiloxane having alkenyl groups,
b) a crosslinker component comprising one or more polyorganohydrogensiloxanes,
c) a filler component comprising one or more reinforcing silicas or resins,
d) at least one dielectric active compound, and
e) a curing catalyst,

wherein the dielectric active compound d) may be selected from carbon black,
i.e. they disclose the use of a curable silicone composition, while the present application is directed at the use of a non-curable silicone composition.

Further, WO2016/110570 discloses a method for the manufacture of an insulator or a field grading assembly comprising the shaping of the above-cited silicone composition by extrusion through a nozzle or a mould, and then curing the shaped composition by heat or light.

While the present application relates to a process comprising the extrusion of a non-curable silicone composition comprising carbon black, and to a curable silicone composition comprising such specific non-curable carbon black silicone composition obtained by a process comprising an extrusion step, resulting in improved properties of the cured silicone compositions for DC applications based on such carbon black paste, WO2016/110570 and US20170372815A1 disclose extrusion as a means of shaping of a curable silicone composition as defined above.

US2004/138370A1 discloses a silicone composition for the use as a conductive liquid rubber composition in e.g. printers, comprising

a) polyorganopolysiloxane having alkenyl groups,
b) at least one dielectric active compound, namely carbon black,
c) a curing catalyst,
d) a cross-linker comprising an organopolysiloxane having two or more silicon-bonded hydrogen atoms in one molecule,

wherein the above-cited components are preferably supplied continuously to a mixing apparatus. The mixing apparatus may be, among others, an extruder.

Accordingly, while in the present application extrusion is a mandatory step in the provision of a non-curable carbon black silicone paste, US2004/138370A1 discloses that the mixing step of all components constituting a curable silicone composition as described therein may be effected by an extruder.

WO2020/063799A1 relates to a conductive liquid silicone rubber composition comprising carbon black, comprising

a) one or more polydiorganosiloxane(s) having at least two alkenyl groups per molecule,
b) at least one organohydrogenpolysiloxane,
c) at least one reinforcing filler,
d) at least one hydrosilylation catalyst, and

e) an electrically conductive filler containing

(i) extra conductive carbon black, and
(ii) single walled carbon nanotubes,

i.e. it relates to a curable silicone rubber composition.

With respect to such curable silicone rubber composition, extrusion is mentioned as means for processing or forming the above-cited curable silicone rubber composition, and thus serves a different purpose than in the present application, which relates to the manufacture of a non-curable carbon black silicone masterbatch using an extrusion process.

WO2009/027133A2 relates to a process for the manufacture of shaped cured silicone articles comprising a shaping step that comprises the continuous shaping of a curable silicone mixture.

According to the disclosure of this document, a part of said mixture, i.e. the part of the uncured mixture of the components

(i) at least one linear polyorganosiloxane having at least three alkenyl groups and an average number of diorganosiloxy units determined by GPC with polystyrene as standard of at least 3000,
(ii) optionally one or more polyorganosiloxane having alkenyl groups, other than the polyorganosiloxane according to the component (i),
(iii) at least one polyorganosiloxane having at least two SiH groups,
(iv) at least one photoactivatable transition metal catalyst,
(v) optionally one or more filler,
(vi) optionally one or more conventional additives,

which is soluble in $CDCl_3$ at 25 °C, has a content of vicinal Si-alkenyl groups of less than 0.025 mol-%.

In contrast to the invention covered by the present application, which relates to a process for the manufacture of a non-curable silicone composition comprising carbon black, the above-cited mixture of the compounds (i) to (vi) represents a curable mixture comprising all compounds required for the silicone composition to be cured: An alkenyl polysiloxane (i), an SiH-functional polysiloxane (iii) and the photoactivatable transition metal catalyst (iv).

While the presence of carbon black is mandatory in the mixture of the process of the invention of the present application, the presence of the filler component (v) of the above-cited mixture is optional.

Further, WO 2009/027133 A2 refers to a process comprising the continuous shaping of the above-cited mixture, wherein the continuous shaping step of the non-cured mixture is an extrusion step, and accordingly the shaping apparatus is an extruder. In the examples of WO 2009/027133, the extrusion of curable silicone compositions is exemplified.

In contrast to the disclosure of WO 2009/027133 A2, the present application relates to a process for the manufacture of a composition comprising the extrusion of one or more polyorganosiloxanes and one or more carbon blacks, i.e. it relates to a process comprising the extrusion of a non-curable composition.

Accordingly, the present inventors carried out extensive investigations to improve the disadvantages of the silicone compositions from the state of the art in terms of their electrical and mechanical properties.

Surprisingly they found out when a CB paste is processed by extruder technology it shows a significantly different behavior compared to a conventional CB paste. The CB nanoparticles are much more homogenously distributed through the silicone material, leading to a number of surprisingly improved electrical properties of the cured silicone rubber compositions prepared therefrom. By the extrusion process also finer particle size distributions of CB are achieved than with the conventionally prepared CB pastes.

Compared to a conventionally prepared CB paste the inventive new CB paste allows the incorporation of much higher amounts of carbon black into the cured silicone rubber compositions without reaching the so-called critical percolation threshold where the resistivity rapidly drops. This allows the incorporation of more carbon black into cured silicone compositions when used as insulators at the same high (or even higher) level of resistivity. In line with this, the cured silicone rubber compositions include a higher concentration of charge traps which allows a reduction of the electrical stress in particular under DC conditions. The resulting electrical properties of the cured silicone compositions thus give more confidence to be run in DC systems at ultra-high voltage (such as 500 kV) which is demanded by the market. Furthermore, as regards electrically conductive silicone rubber compositions, the use of the inventive new CB paste allows the incorporation of much higher amounts of carbon black into curable silicone. Accordingly, the extruded CB paste allows the use of high CB concentrations in conductive LSR whereby the mechanical properties are improved. This allows to providing silicone rubber compositions with good mechanical properties and - if required - a very high electrical conductivity in particular for use in high voltage direct current applications, in particular for one or more layers in the cable accessories.

In accordance with the present invention there is provided a process for the manufacture of a non-curable silicone

composition comprising carbon black, said process comprises the extrusion of one or more polyorganosiloxanes a1 ) with one or more carbon blacks d).

In accordance with the present invention the term "non-curable silicone composition" intends to mean that the silicone composition does not contain the components that are required to cure the silicone composition under common polysiloxane curing conditions. Given the usual silicone rubber curing modes, including a hydrosilylation cure system, such as a platinum-catalyzed cure system, or addition cure systems, a condensation cure system, a peroxide cure system, or an oxime cure system, the non-curable silicone composition obtained according to the invention does not comprise the components required to effect such curing, in particular, of course also in the extrusion process. So, for a hydrosilylation cure systems, such as platinum-catalyzed addition cure system the non-curable silicone composition cannot comprise a hydride-, an alkenyl-functional polysiloxane and a hydrosilylation catalyst at the same time, and preferably includes only the alkenyl-functional polysiloxane. Likewise, the non-curable silicone composition cannot comprise a peroxide to cure the polyorganosiloxanes a1).

Accordingly, preferably the non-curable silicone composition of the invention does not comprise a polyorganohydrogensiloxane or a hydrosilylation curing catalyst, preferably it neither contains a polyorganohydrogensiloxane nor a hydrosilylation curing catalyst, and does also not comprise a peroxide.

In a preferred embodiment the total viscosity of the one or more polyorganosiloxanes a1) is less than 100 preferably 1 to 100 Pa•s, more preferably 5 to 100 Pa•s and still more preferably 10 or 65 Pa•s (each measured at a shear rate of D=10 $s^{-1}$ at 20 °C, measured e.g. according to DIN EN ISO 3219). In this respect the term "total viscosity" refers to the viscosity of the entire polyorganosiloxanes a1) if more than one polyorganosiloxane is used or to the viscosity of one polyorganosiloxane a1), if only one polyorganosiloxane a1) is used. In the former case the viscosity of the individual polyorganosiloxanes a1) may deviate from the preferred viscosity range indicated before. In a preferred embodiment the polyorganosiloxanes a1) are selected from polyorganosiloxanes having one or more unsaturated groups preferably one or more alkenyl groups as described below. Such polyorganosiloxanes a1) have organic substituents R preferably selected from the group consisting of optionally substituted alkyl, such as alkyl groups and halogenalkyl groups, optionally substituted aryl, such as phenyl and unsaturated substituents $R^1$ preferably selected from the group consisting of alkenyl groups, such as vinyl groups, and preferably have an average degree of polymerisation $P_n$ between 100 to 12000 siloxy units. With respect to such polyorganosiloxanes a1) it can be referred to the polyorganosiloxanes having alkenyl groups a2) which are used in the curable silicone composition as described below. The process according to the invention comprises mixing and extruding the one or more polyorganosiloxanes a1) with the one or more carbon blacks d). Basically, several kinds of extruders might be used such as the generally known single-screw extruders, twin-screw extruders, and planetary roller extruders. Among them single-screw extruders are less preferred since the homogenization and dispersion is weaker. While planetary roller extruders have an extremely good mixing effect compared to all other extruder types, their conveying effect is much lower. Therefore, from the viewpoints of the homogenization and dispersion effect on the one hand and the conveying effect on the other side in the present invention twin-screw extruders, in particular, co-rotating twin-screw extruders are preferred. In principle it is possible to prepare a premixture of components a1) and d) which is then fed into the extruder by a suitable dosing unit, but a split-feed process through at least two, preferably two dosing units, is preferred to separately feed the components a1) and d). Preferably, the extruder has two feeding sections, the first one is preferably for the polyorganosiloxanes a1), which usually forms a viscous fluid at room temperature. It may be fed for example with a twin-screw feeder, such as a twin-screw loss-in-weight feeder or a dosing system like a piston drum pump or a gear pump. The one or more carbon blacks d) are fed in one or more, preferably one or two dosing units, such as gravimetric feeders, downstream the polyorganosiloxane feeding unit. The carbon black dosing units are preferably arranged at such place of the extruder where the polyorganosiloxane is completely liquid in order to allow distributive and dispersive mixing of the carbon black and the polyorganosiloxanes.

The extrusion is usually carried out at a temperature of the extruded mass of room temperature (25°C) to 250°C, preferably at a temperature of the extruded mass in the range of 50 to 200 °C. The melting and homogenizing process in the extruder is preferably carried out without supplying heat, which is generated by the shear forces in the extruder. Optionally it is possible to supply external heat, but it is even more preferably to provide external cooling means in order not reach temperatures that may lead to decomposition of the polyorganosiloxane especially at high carbon black loads. Preferably the extrusion is carried out using one or more of the following conditions:

- co-rotating twin screws,
- a screw diameter in the range of 15 to 250 mm, preferably 20 to 100 mm,
- a feed rate of about 1 to 600 kg/hour, preferably 100 to 550 kg/hour, more preferably 10 to 50 kg/hour,
- a screw speed of 50 to 1200 rpm, preferably 100 to 1000 rpm,
- a temperature of the extruded mass of 50 to 200°C,
- an L/D ratio of 20 to 80, preferably 30 to 70, (L being the length of the extruder and D its diameter),
- a residence time of 10 seconds to 10 minutes, preferably 15 seconds to 2 minutes,
- using cylinder cooling,

- using a segmented design with screw elements having geometries that allow for strong dispersion.

Preferred extruders are for example the ZSE MAXX SERIES co-rotating twin screw extruders from Leistritz Extrusionstechnik GmbH, Nuremberg Germany, with a screw diameter of 15 to 250 mm, preferably 20 to 100 mm, using high-dispersing screws.

In the extrusion process of the invention preferably the weight ratio of the weight of the one or more polyorganosiloxanes a1) to weight of the one or more carbon blacks d) is from 90:10 to 75:25, preferably from 89 to 11 to 80 to 20, even more preferably from 88 to 12 to 81 to 19.

In a preferred embodiment only the one or more polyorganosiloxanes a1) and the one or more carbon blacks d) are extruded, or with other words no other components are present in the extrusion process. Also, in a preferred embodiment only one kind of polyorganosiloxane a1) and one kind of carbon black d) are extruded to prepare a high load carbon black in polysiloxane masterbatch having an excellent homogenous particle size distribution which is also finer than the particle size distributions achieved by the conventional processes.

In a further aspect the present invention relates to a non-curable silicone composition obtained by the process of the invention. Such "non-curable composition" is also sometimes referred to as the "masterbatch".

The non-curable silicone composition according the invention preferably comprises at least 10, preferably at least 11, more preferably at least 12 weight percent, still more preferably at least 13 weight percent and still more preferably at least 14 weight percent of the one or more carbon blacks d) based on the total weight of the entire silicone composition.

The non-curable silicone composition according to the invention preferably comprises from 10 to 25, preferably from 11 to 24, still more preferably from 12 to 23 weight percent, still more preferably from 13 to 22 weight percent and still more preferably from 14 to 21 weight percent of the one or more carbon blacks d) based on the total weight of the entire silicone composition.

While it is generally preferred that the "non-curable composition" or carbon black "masterbatch" comprises higher amounts of 10 to 25 weight percent of the one or more carbon blacks d) based on the total weight of the entire silicone composition, it is also possible to prepare non-curable compositions with lower amounts of carbon black, if required, such as from 3 to 10 weight percent of the one or more carbon blacks d) based on the total weight of the entire silicone composition. Also, those non-curable compositions with lower amounts of carbon black benefit from the more homogeneous, and finer particle size distributions achieved by the extrusion process.

Preferably the non-curable silicone composition according to the invention consists of one or more polyorganosiloxanes a1) and one or more carbon blacks d), even more preferably it consists of one kind of polyorganosiloxane a1) and one kind of carbon black d).

In the present invention the one or more carbon blacks d) preferably comprise at least one carbon black selected from conductive carbon blacks having a BET surface of > 30 $m^2/g$ and an average primary particle size of $D_{50}$ between 5 to 500 nm. Even more preferably the carbon black component d) in the non-curable composition according to the invention consists of conductive carbon blacks having a BET surface of > 30 $m^2/g$ and/or an average primary particle size of $D_{50}$ between 5 and 500 nm. In general, it has to be distinguished between primary particle size and the agglomerate particle size of the carbon black in the non-curable silicone composition of the invention. While the primary carbon black primary particles sizes or diameters are well in the range of 5 to 500 nm, the agglomerate particle sizes in the non-curable silicone composition of the invention determined in particular by the light scattering method are generally higher than about 0.5 μm, and preferably are substantially in the range of about 0.5 to about 10 μm, more preferably, substantially in the range of about 1 to about 10 μm.

The particle size distribution of the carbon black in the non-curable silicone composition may be measured, in particular, by light scattering according to DIN EN ISO/IEC 17025 in toluene solution using the scattering model according to the Mie theory measured at the lowest possible rotational speed of the dispersing unit corresponding to the lowest possible shear. Preferably the result is presented as a superposition of one or more measurements over a period of 5-15 minutes. Measurements can be carried out in particular with a Malvern Zetasizer apparatus. Such measurement method provides the number or volume percentages of the particle size distribution.

It turned out that the extrusion process in accordance with the invention surprisingly leads to a substantial increase in the number of particles having a particle size of below 10 μm compared to the conventional master batch produced via three roll mill technology or a twin blade kneader even at high carbon black loads. Without being bound to theory, it is assumed that the extrusion process according to the invention leads to a better deagglomeration or distribution of the carbon black particles in the CB-silicone masterbatch.

Preferably the percentage of the number of particles less than 10 μm is more than 70 % preferably more than 80 %, still more preferably more than 90 %. Preferably the percentage of the number of particles of more than 10 μm is less than 30 % preferably less than 20 % still more preferably less than 10 %, still more preferably less than 5 %.

The $Dn_{50}$ of the particle size distribution based on the number of particles of the non-curable silicone composition is preferably less than 7 μm, more preferably less than 5 μm, and most preferably less than 3 μm.

The $Dn_{90}$ of the particle size distribution based on the number of particles of the non-curable silicone composition

is preferably less than 15 μm, more preferably less than 10 μm more preferably less than 8 μm and most preferably less than 5 μm.

$Dn_{50}$ is the size in microns that splits the number distribution with half above and half below this diameter. The $Dn_{50}$ is used is the median for number distributions. For $Dn_{90}$ 90% of the particles have a size below this diameter. (see https://www.horiba.com/uk/scientific/products/particle-characterization/education/general-information/data-interpretation/understanding-particle-size-distribution-calculations/).

In the non-curable silicone composition according to the invention particularly preferred the one or more carbon blacks comprise at least one carbon black selected from conductive carbon blacks having one or more of the following properties:

- a BET surface area of > 100 to 1500 $m^2/g$, more preferably > 100 to 1400 $m^2/g$, more preferably > 100 to 1000 $m^2/g$, more preferably > 250 to 1000 $m^2/g$, more preferably > 500 to 1000 $m^2/g$, and/or
- a particle size of D50 between 5 to 500 nm, more preferably 10 to 200 nm, and/or
- a DBP pore volume 300-600 ml/100g, more preferably 300-550 ml/100g, more preferably 300-400 ml/100g, and/or
- iodine adsorption 700-1200 mg/g, more preferably 700-1150 mg/g, more preferably 700-1000 mg/g, more preferably 700-900 mg/g, and/or
- pH 8-11, more preferably pH 9-11, more preferably pH 9-10.5 and/or
- metal content < 50 ppm, and/or
- sulphur content < 150 ppm, and/or
- water content < 0.5 wt.%, and/or
- volatiles content < 1 wt.%, and/or
- fines <125 micron in pellets < 10 wt.-%, and/or
- grit content: < 50 mg/kg, and/or
- ash content: < 0.1 wt.-%.

Preferably the one or more carbon blacks consist of at least one, preferably one carbon black selected from conductive carbon blacks having the one or more properties mentioned before.

The present invention in a further aspect relates to the use of the non-curable silicone composition as defined before for the manufacture of curable silicone compositions. Such use generally requires that the non-curable silicone composition is ultimately mixed with components that are required for manufacturing a curable silicone composition in particular as the ones described in the following. Accordingly, the present invention in a further aspect also relates to the use of the non-curable silicone composition as defined above as a masterbatch for incorporation into curable silicone composition. As is well known to the skilled person in the art, a masterbatch is usually a solid additive for plastic used for coloring plastics (color masterbatch) or imparting other properties to plastics (additive masterbatch). In the present invention the masterbatch is preferably used, but not limited to, for the incorporation of the one or more carbon blacks d) into curable silicone compositions as described in the following.

Due to its high homogeneity the non-curable silicone composition according to the invention and the beneficial electrical properties resulting therefrom the non-curable silicone composition according to the invention (masterbatch) is particular suitable in high voltage direct current applications, that is, in particular, for the manufacture of curable silicone compositions for use in high voltage direct current applications.

Accordingly, in a further aspect the present invention relates to a curable silicone composition comprising the non-curable silicone composition according to the invention as described above.

A particularly preferred curable silicone composition, comprising the non-curable silicone composition according to the invention, comprises:

a) 100 pt.wt. (parts by weight) of one or more polyorganosiloxane having alkenyl groups a2),

b) 0 - 100 pt.wt., preferably > 0 to 100 pt.wt. of a crosslinker component comprising one or more polyorganohydrogensiloxanes,

c) 0 - 100 pt.wt., preferably > 0 to 100 pt.wt. of one or more filler components, comprising one or more reinforcing silicas or resins,

d) 0.1 - 3 pt.wt., preferably 0.2 to 2.8 pt.wt., more preferably 0.3 to 2.7 pt.wt., more preferably 0.4 to 2.6 pt.wt., more preferably 0.5 to 2.5 pt.wt., more preferably 0.6 to 2.3 pt.wt., more preferably 0.8 to 2.1 pt.wt of one or more carbon blacks,

e) a curing catalyst selected from the group consisting of a compound enabling hydrosilylation and an organic

peroxide, and

f) 0 - 50 pt.wt. of one or more auxiliary additives.

Preferably the curable silicone composition of the invention comprises a crosslinker component comprising one or more polyorganohydrogensiloxanes.

Preferably the curable silicone composition of the invention comprises one or more filler components, comprising one or more reinforcing silicas or resins.

Such curable silicone compositions preferably comprise from 0.1 to 2.5 weight percent, preferably from 0.2 to 2.4 weight percent, more preferably from 0.3 to 2.3 weight percent, more preferably from 0.4 to 2.2 weight percent, more preferably from 0.5 to 2.1 weight percent, more preferably from 0.6 to 2.0, more preferably from 0.7 to 1.9 weight percent weight, more preferably from 0.8 to 1.8 weight percent of one or more carbon blacks d) based on the total weight of the curable silicone composition, such carbon blacks d) resulting from the non-curable silicone composition comprising the same, i.e. from the masterbatch.

Such curable silicone compositions having a relatively low content of carbon black have a relatively low conductivity and are suitable in particular in insulator or field grading assemblies for high voltage direct current (HVDC) applications as described below in more detail.

In the following the components of the curable silicone composition according to the invention are described. As stated above the one or more polyorganosiloxanes a1) are preferably selected from the polyorganosiloxane having alkenyl groups a2) as described in the following. The polyorganosiloxanes a1) and the polyorganosiloxane having alkenyl groups a2) can be the same or different.

**Polyorganosiloxane having alkenyl groups a2)**

The curable silicone composition comprises as a base polymer one or more polyorganosiloxanes having one or more alkenyl groups a2) preferably at least two alkenyl groups.

Preferably the polyorganosiloxanes a2) are selected from the group of one or more polyorganosiloxanes having organic substituents R, i.e. having at least one carbon atom and being bond to the silicon atom by a carbon atom, preferably selected form the group which consists of optionally substituted alkyl groups, such as methyl or halogen alkyl groups such as fluorine-substituted propyl groups, optionally substituted aryl groups, such as phenyl, and one or more alkenyl groups $R^1$, in particular vinyl groups, and an average degree of polymerisation ($P_n$) between 100 to 12000 siloxy units, calculated in particular from the number average molecular weight which may be determined by GPC measurement versus polystyrene standard, following in particular the procedure according to ASTM D5296 - 11.

The polyorganosiloxanes as component a2) having alkenyl groups, most preferably in average have at least two alkenyl groups.

Suitable components a2) may be described by the general formula (I),

$$(M_aD_bT_cQ_dR^2{}_e)_m \qquad \text{(I)}$$

wherein the indices in formula (I) represent the ratios of the siloxy units M, D, T and Q, which may be distributed blockwise or randomly in the polyorganosiloxane. Within a polyorganosiloxane each siloxane unit may be identical or different and

a = 0 - 10

b = 0 - 12000

c = 0 - 50

d = 0 - 1

e = 0 - 300

m = 1 - 1000,

wherein the indices a, b, c, d and m being such that the viscosity of component a) at 20 °C is less than 50 kPa.s (measured at a shear rate of D=10 $s^{-1}$ at 20 °C), whereby not all indices of a to e can be 0, preferably (a + b) is > 0.

The viscosity of component a2) refers to the viscosity of a single component a2) or a mixture of components a2). The latter case of the mixture includes the presence of individual components a2) that may have a viscosity exceeding 50 kPa.s at 20° C at a shear rate of $D=10\ s^{-1}$ , for example resinous components or gums a2) that comprise Q and or T units.
In formula (I) the sum of indices should represent the average polymerisation degree $P_n$ based on the average number molecular mass $M_n$.
In the formula (I):

M= $R_3SiO_{1/2}$, or M*

D= $R_2SiO_{2/2}$, or D*

T= $RSiO_{3/2}$, or T*

Q=$SiO_{4/2}$,

divalent groups $R^2$, which are bridging groups between siloxy groups above, which are preferably divalent optionally substituted hydrocarbyl groups, such as optionally substituted alkenyl groups having for example from 2 to 10 carbon atoms, or optionally substituted aromatic groups such as arylene groups, which are bound to silicon atom with a carbon atom thereof, and

wherein each R, which may be the same or different, and each be an organic group, which is preferably selected from optionally substituted alkyl with up to 12 carbon atoms, optionally substituted aryl with up to 12 carbon atoms, the groups R being free of aliphatic unsaturation, and

wherein

M*= $R^1_pR_{3-p}SiO_{1/2}$,

D*= $R^1_qR_{2-q}SiO_{2/2}$,

T*= $R^1SiO_{3/2}$,

wherein

p= 0-3, preferably 1-3,

q= 1-2, and

$R^1$ is as defined above.

R is preferably selected from n-$C_1$-$C_{12}$-, iso-$C_3$-$C_{12}$-, or tertiary-$C_4$-$C_{12}$-alkyl, alkoxyalkyl, $C_5$-$C_{12}$-cyclic alkyl, or $C_6$-$C_{12}$-aryl, alkylaryl, which groups may be substituted in addition by one or more O-, Cl-, CN- or F-atom, or poly($C_2$ -$C_4$)-alkylene ethers with up to 500 alkylene oxy units the groups R being free of aliphatic unsaturation,

Examples of suitable monovalent hydrocarbon radicals include alkyl radicals, preferably such as $CH_3$-, $CH_3CH_2$-, $(CH_3)_2CH$-, $C_8H_{17}$- and $C_{10}H_{21}$-, and cycloaliphatic radicals, such as cyclohexylethyl, aryl radicals, such as phenyl, tolyl, xylyl, aralkyl radicals, such as benzyl, 2-phenylethyl and 2-phenylpropyl. Preferable monovalent halohydrocarbon radicals have the formula $C_nF_{2n+1}CH_2CH_2$- wherein n has a value of from 1 to 10, such as, for example, $CF_3CH_2CH_2$-, $C_4F_9CH_2CH_2$- , $C_6F_{13}CH_2CH_2$-, $C_2F_5$-O($CF_2$-$CF_2$-O)$_{1-10}$$CF_2$-, F(CF($CF_3$)-$CF_2$-O)$_{1-5}$-($CF_2$)$_{0-2}$-, $C_3F_7$-OCF($CF_3$)- and $C_3F_7$-OCF($CF_3$)-$CF_2$-OCF($CF_3$)-.
The preferred groups for R in the polyorganosiloxane a2) of the inventive curable silicone composition are selected form the group which consists of methyl, phenyl, 3,3,3-trifluoropropyl groups and the most preferable group R is the methyl group.
$R^1$ is preferably selected from unsaturated groups, comprising C=C-group-containing groups (alkenyl groups), e.g.: n-$C_2$-$C_{14}$-, iso-$C_3$-$C_{14}$-, or tertiary- $C_4$-$C_{14}$-alkenyl or $C_6$-$C_{14}$-cyclic alkenyl, $C_6$-$C_{14}$-cycloalkenyl, $C_8$-$C_{14}$ -alkenylaryl, cycloalkenylalkyl, vinyl, allyl, methallyl, 3-butenyl, 5-hexenyl, 7-octenyl, ethyliden-norbornyl, styryl, vinylphenylethyl, norbornenyl-ethyl, limonenyl, optionally substituted by one or more O- or F-atoms, or C≡C-group-containing groups (alkinyl groups), optionally comprising one or more O- or F-atoms.

The alkenyl radicals are preferably attached to terminal silicon atoms; the olefin function is at the end of the alkenyl group of the higher alkenyl radicals, because of the easier availability of the alpha-, omega-dienes used to prepare the alkenylsiloxanes.

Preferred groups for $R^1$ are vinyl, allyl, 5-hexenyl, cyclohexenyl, limonyl, styryl, vinylphenylethyl, most preferred group $R^1$ as vinyl.

The group $R^2$ includes for example divalent aliphatic or aromatic n-, iso-, tertiary- or cycloalkylene with up to 14 carbon atoms, arylene or alkylenearyl groups. $R^2$ forms bridging elements between two siloxy units. The content of the $R^2$ groups does not exceed 30 mol.% preferably not exceed 20 mol.% of all siloxy units. Preferably $R^2$ is absent. Preferred examples of suitable divalent hydrocarbon groups $R^2$ include any alkylene residue, preferably such as - $CH_2$-, $-CH_2CH_2-$, $-CH_2(CH_3)CH-$, $-(CH_2)_4-$, $-CH_2CH(CH_3)CH_2-$, $-(CH_2)_6-$, $-(CH_2)_8-$ and $-(CH_2)_{18}-$; cycloalkylene radical, such as cyclohexylene; arylene radicals, such as phenylene, xylene and combinations of hydrocarbon radicals, such as benzylene, i.e. $-CH_2CH_2-C_6H_4-CH_2CH_2-$, - $C_6H_4CH_2-$. Preferred groups are alpha, omega-ethylene, alpha, omega-hexylene,1,4-phenylene or 1,4-ethylenephenyl.

Further examples include divalent halohydrocarbon radicals $R^2$ e.g. any divalent hydrocarbon group $R^2$ wherein one or more hydrogen atoms have been replaced by halogen, such as fluorine, chlorine or bromine. Preferable divalent halohydrocarbon residues have the formula $-CH_2CH_2(CF_2)_{1-10}CH_2CH_2-$ such as for example, $-CH_2CH_2CF_2CF_2CH_2CH_2-$ or other examples of suitable divalent hydrocarbon ether radicals and halohydrocarbon ether radicals including - $CH_2CH_2OCH_2CH_2-$, $-C_6H_4-O-C_6H_4-$, $-CH_2CH_2CF_2OCF_2CH_2CH_2-$, and $-CH_2CH_2OCH_2CH_2CH_2-$.

Such polymers as component a2) comprising R, $R^1$ and/or $R^2$ radicals are e.g. alkenyldimethylsiloxy or trimethylsiloxy terminated polydimethylsiloxanes, which may contain other siloxane units than alkenylmethylsiloxy groups dimethylsiloxy groups such as poly(dimethyl-co-diphenyl)siloxanes.

Broadly stated component a2) of the curable silicone compositions of this invention may be any polyorganosiloxane compound containing two or more silicon atoms linked by oxygen and/or divalent groups $R^2$ wherein the silicon is bonded to 0 to 3 monovalent groups per silicon atom, with the proviso that the polyorganosiloxane compound contains at least two silicon-bonded unsaturated hydrocarbon residues including olefinic radicals and acetylenic radicals, preferably with the radicals such as alkenyl groups.

The siloxane units M, M*, D, D*, T, T* with the radicals R and/or $R^1$ may be equal or different for each silicon atom. In a preferred embodiment the structure is

$$R^1_pR_{3-p}SiO(R_2SiO)_{m1}(R^1RSiO)_nSiR^1_pR_{3-p} \qquad (1)$$

p = 0 - 3, preferably 1,

m1 = 0 - 12000, preferably 10-6000, more preferred 100-1000

n = 0- 5000 preferably 3-2000, more preferred 5-500.

One preferred polyorganosiloxane component a2) for the curable composition of this invention is a substantially linear polyorganosiloxane a3). The expression "substantially linear" includes polyorganosiloxanes that do not contain more than 0.2 mol.% (trace amounts) of siloxy units of the type T or Q. This means that the polymer a2) is preferably a linear, flowable fluid a3) such as of the formula:

$$R^1_pR_{3-p}SiO(R_2SiO)_{m1}SiR_{3-p}R_p^1 \qquad (1a)$$

wherein $R^1$, R, p and m1 are each as defined above,

with the proviso, that there are at least two alkenyl groups per molecule.

The polyorganosiloxanes a2) or a3) are most preferably selected from those the formula (1a).

Preferred structures include

$$Vi_pMe_{3-p}SiO(Me_2SiO)_{10-12000}\ SiMe_{3-p}\ Vi_p \qquad (1b),$$

$$PhMeViSiO(Me_2SiO)_{10-12000}\ SiPhMeVi \qquad (1c),$$

In the group of alkenyl comprising polysiloxanes a2) the addition of a second or third polysiloxanes as component

a4) and/or a5) is preferred. The purpose of component a4) and a5), so-called vinyl rich polymers, is to modify mechanical properties and crosslinking density.

Polymers suitable for LSR (Liquid Silicone Rubber) are selected from the group of siloxane polymers with $P_n$ of 100 to 2000 siloxy units, those for HCR (High Consistency Rubbers as explained below) are preferably selected from the group of siloxane polymers with $P_n$ of 2000 to 12000 siloxy units.

The polymers a4) are selected either from the group consisting of polymers of the formulas (1d) to (1i), i.e. linear polyorganosiloxanes having additional alkenyl side groups wherein the concentration of T- and Q-groups are below 0.2 mol.% or polyorganosiloxanes having a higher concentration of T- and Q-groups than the previous polymer types a2) or a3).

The polymers a4) are for example represented by the formulas 1d)- 1f)

$$R^1{}_pR_{3-p}(R_2SiO)_{b1}(R^1R\ SiO)_{b1x}SiR_{3-p}R_p{}^1 \qquad (1d)$$

$$Me_3SiO(Me_2SiO)_{b1}(MeR^1SiO)_{b1x}SiMe_3 \qquad (1e),$$

$$R^1Me_2SiO(Me_2SiO)_{b1}(Me\ R^1SiO)_{b1x}SiMe_2R^1 \qquad (1f),$$

where

b1 = > 0 - 12000

b1x = 0 - 5000

$$b1 + b1x = > 10 - 12000$$

$R^1$, R, p are as defined above, and

$R^1$= preferably vinyl, allyl, hexenyl, cyclohexenyl, limonyl, styryl, vinylphenylethyl.

And preferred groups for R are methyl, phenyl, 3,3,3-trifluoropropyl.

Other preferred structures of a4) are

$$Vi_pMe_{3-p}SiO(Me_2SiO)_{10-12000}\ (MeViSiO)_{1-4000}\ SiMe_{3-p}Vi_p \qquad (1g),$$

$$Me_3SiO(Me_2SiO)_{10-12000}\ (MeViSiO)_{1-4000}SiMe_3 \qquad (1h),$$

$$PhMeViSiO(Me_2SiO)_{10-12000}\ (MePhSiO)_{1-4000}SiPhMeVi \qquad (1i)$$

and wherein in the above Me= methyl, Vi= vinyl, Ph= phenyl, and p= 0 to 3, preferred p=1.

The third component of polymer a2), i.e. branched polymers a5), are preferably selected from those of the formula (Ia) wherein the polyorganosiloxane a5) comprising alkenyl groups have more than 0.2 mol.% of $T=RSiO_{3/2}$ or $Q=SiO_{4/2}$-units.

$$(M_{0.4-4}D_{0-1000}T_{0-50}Q_{0-1})_{1-1000} \qquad (Ia)$$

where

M= $R_3SiO_{1/2}$, or M*
D= $R_2SiO_{2/2}$, or D*
T= $RSiO_{3/2}$, or T*
Q=$SiO_{4/2}$

each as defined above,
wherein M*, D* and T* are as defined above, carrying unsaturated groups $R^1$. The amount of such M*, D* and T* units is preferably 0.001 to 20 mol.%, more preferably 0.01 to 15 mol.%, most preferably 0.1 to 10 mol.% based on all siloxy units.

The range of the sub-indices defines a range of the possible average polymerization degrees $P_n$ according to the number average molecular weight $M_n$.

The indices relate to suitable viscosities as defined later on and describe polymers without any solvent for a viscosity adjustment.

The preferred branched polyorganosiloxanes a4) and a5) have usually a higher concentration of unsaturated groups $R^1$. Branched polymers a5) are described e.g. in US 5109095. Preferably the branched vinyl-rich polymers a5) are soluble in xylene > 10 wt.% resin and have a range of D : T > 10 : 1 preferably > 33 : 1 and/or respectively

$$(M : Q) = (0.5 \text{ to } 4) : 1,$$

such as e.g. $(M_{0.7}M^*_{0.05}Q)_{10\text{-}500}$ (1j).

All these polyorganosiloxanes may be prepared by any of the conventional methods for preparing triorganosiloxane-terminated polydiorganosiloxanes. For example, a proper ratio of the appropriate hydrolyzable silanes, e.g., vinyldimethylchlorosilane, trimethylchlorosilane, tetrachlorosilane, methyltrichlorosilane and dimethyldichlorosilane, or its corresponding alkoxysilanes, may be co-hydrolyzed and condensed. Other reaction routes may run alternately over equilibration reactions of 1,3-divinyltetraorganodisiloxane, e.g. symmetrical divinyldimethyldiphenylsiloxane or divinyltetramethylsiloxane, which furnishes the endgroups of the polydiorganosiloxane, which may be equilibrated with an appropriate polydiorganosiloxane, e.g., octamethylcyclotetrasiloxane, in the presence of an acidic or basic catalyst.

The vinyl-rich polymers are in particular the branched polymers having MQ or MDQ structures and Si-alkenyl or SiH groups. Such branched polymers can replace the filler component c) partly or completely and provide nevertheless high mechanical reinforcement. This could be an additional option to reduce viscosity and modify electrical properties.

In a preferred embodiment the polymer component a2) in the curable silicone composition can be a mixture of polymers of the formula (Ia) and/or of the formula (1d) and/or (1j) whereby the mixture has an alkenyl content in average of preferably below 2 mol.% of all siloxy units of the mixture a), whereby polymer a3) is present in a higher amount than a4) or a5).

For so-called High Consistency Rubbers the related silicone polymer (gum) viscosity is between 5-100 kPa.s at 20°C at a shear rate of $D=10\ s^{-1}$. In case of polydimethylsiloxanes this relates roughly to $P_n$ values of 3000-12000 siloxy units.

In the preferred embodiment of curable Liquid Silicone Rubber (LSR) compositions it is preferred to use viscosities of less than 1 kPa.s at 20°C and at a shear rate of $D=10\ s^{-1}$; with respect to polydimethylsiloxanes this relates roughly to $P_n$ values of < 2500 siloxy units. In both embodiments polydimethylsiloxanes having vinyl groups are preferred.

The viscosity of the polyorganosiloxane a2) for this embodiment is preferably 100 to $300{*}10^3$ mPa.s at 20°C at a shear rate of $D = 10\ s^{-1}$ and the $P_n$ is > 10 to 2500.

In a preferred embodiment for an LSR composition containing a polymer a2) or a mixture of e.g. 2-4 polymers of component a2) the blend should have a viscosity of less than 200,000 mPa.s at 20 °C and at a shear rate of $D= 10\ s^{-1}$, in order to ensure a sufficiently low viscosity for liquid silicone rubber composition. Such a low viscosity is an assumption and is advantageous for the manufacture of compositions comprising reinforcing fillers and processing these compositions in an LSR injection molding process.

The alkenyl content of the components a2) may be determined here by way of $^1$H NMR - see A.L. Smith (ed.): The Analytical Chemistry of Silicones, J. Wiley & Sons 1991 Vol. 112 pp. 356 et seq. in Chemical Analysis ed. by J.D. Winefordner.

In a further preferred embodiment component a2) comprises at least one of component A1), and at least one of component A2), which are defined as follows:

A1) at least one polyorganosiloxane of the formula (Ia),

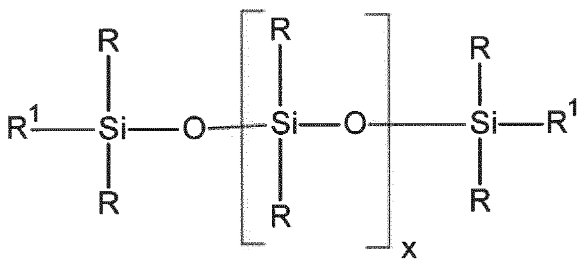

(Ia)

wherein each R is independently selected from saturated or aromatic organic groups, each $R^1$ is independently

selected from alkenyl groups, and x is ≥ 0,

A2) at least one polyorganosiloxane of the formula (Ib),

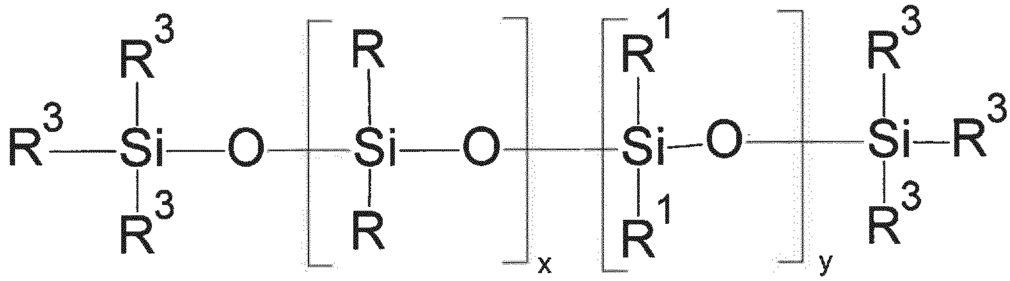

(Ib)

wherein x, R and $R^1$ are as defined above; $R^3$ is selected from R or $R^1$ and y is ≥ 1, and wherein preferably the molar ratio of the alkenyl groups $R^1$ in component A2) to the alkenyl groups $R^1$ in component A1) is in the range of 0.3 to 8, preferably 0.6 to 6, more preferably 1 to 5.

Component a2) preferably used to prepare the non-curable masterbatch composition comprising the polyorganosiloxane a1) is again preferably selected from the linear component A1) as defined before.

**Crosslinker component b)**

In a preferred embodiment the curable polyorganosiloxane composition is cured by a hydrosilylation reaction and then comprises one or more polyorganohydrogensiloxanes b) as a crosslinker. In such a case the organic peroxide component e) as a crosslinking initiator is preferably omitted.

The inventive curable silicone composition comprises preferably a crosslinker component b) which is selected from the group of polyorganohydrogensiloxanes comprising preferably units selected from those of the formula RHSiO and $R_2HSiO_{0.5}$ and a concentration of SiH units of 1 to 100 mol.% related to all siloxane units,
whereby R an organic group as defined above, and is preferably methyl or phenyl.

The component b) is preferably at least one polyorganohydrogensiloxane having at least two Si-H-groups. Suitable polyorganohydrogensiloxanes b) comprising SiH units may be formally described by the general formula (II),

$$(M^1_{a2}D^1_{b2}T^1_{c2}Q_{d2}\,R^2_{e2})_{m2} \qquad \text{(II)}$$

wherein the siloxy units
$M^1$ = M, as defined above, or M**,
$D^1$ = D, as defined above, or D**,
$T^1$ = T, as defined above, or T**,
Q as defined above, and
R and $R^2$ are as defined above,
with
M**= $HR_2SiO_{1/2}$, D**= $HRSiO_{2/2}$, T**= $HSiO_{3/2}$,

| | |
|---|---|
| a2 = 0.01-10 | preferably = 2-5, most preferably =2 |
| b2 = 0-1000 | preferably = 10-500 |
| c2 = 0-50 | preferably= 0 |
| d2 = 0-1 | preferably = 0 or 1, most preferably = 0 |
| e2 = 0-3 | preferably = 0 |
| m2= 1-1000, | preferably = 1-500, most preferably =1-20, |

whereby not all indices of "a to e" can be 0, preferably (a + b) is > 0,
with the proviso that in the general formula (II) at least two SiH-containing siloxy units selected from M**, D** and T** are present.

Preferably the polyorganohydrogensiloxanes b) have in average at least four, preferably at least five, still more

preferably at least six silicon atoms.

The siloxy units may be distributed blockwise or randomly in the polymer chain.

The aforementioned indices should represent the average polymerization degree $P_n$ based on the average number molecular mass $M_n$ as described before.

The range for the M-, D-, T- and Q-units present in the molecule may cover nearly all values leading to fluids, flowable polymers, liquid and solid resins. It is preferred to use at room temperature (25°C) liquid linear, cyclic or branched siloxanes. Optionally these siloxanes may comprise additionally traces of $C_1$-$C_6$-alkoxy or Si-hydroxy groups remaining from the synthesis.

Preferred structures of component b) in the curable silicone compositions of this invention are siloxanes of formula (2a) to (2e).

$$H_{a1}(R)_{3-a1}Si(RHSiO)_x(R_2SiO)_y(RR^1SiO)_zSi(R)_{3-a1}H_{a1} \qquad (2a)$$

more specifically:

$$HR_2SiO(R_2SiO)_y(RR^1SiO)_z(RHSiO)_xSiR_2H \qquad (2b)$$

$$HMe_2\,SiO(Me_2SiO)_y(RR^1SiO)_z(MeHSiO)_xSiMe_2H \qquad (2c)$$

$$Me_3SiO(MeHSiO)_xSiMe_3 \qquad (2d)$$

$$\{(HRSiO)_v(R_2SiO)_w\} \qquad (2e)$$

wherein R and $R^1$ are as defined above, R is preferably methyl and/or phenyl, $R^1$ is preferably vinyl, and the index 'a1' is 0-1, preferably 0, and

x = 2 - 1000, preferably = 2-500,

y = 0 - 650, preferably = 0-100,

z = 0 - 65, preferably = 0

preferably 3 < x + y +z <1000, more preferably 4 < x + y +z < 650,

v is 2 to 7,

w is 0 to 3,

$3 \leq v+w \leq 7$.

Furthermore, resinous polyorganohydrogensiloxanes of the following formula are possible:

$$\{(T^1)(R^4O_{1/2})_{n2}\}_{m2} \qquad (2f)$$

$$\{(SiO_{4/2}\})(R^4O_{1/2})_{n2}(M^1)_{0,01-10}(T^1)_{0-50}(D^1)_{0-1000}\}_{m2} \qquad (2g)$$

wherein

$T^1$, M', $D^1$ are as defined above,

n2 = 0 to 3

m2 is as defined above

$R^4$ is hydrogen, $C_1$-$C_{25}$-alkyl, such as methyl, ethyl, n-propyl, iso-propyl, n-, iso- and tert.-butyl, alkanoyl, such acyl, aryl, -N=CHR, such as butanonoxime, alkenyl, such as propenyl.

One preferred embodiment of the compounds (2g) is provided by way of example by monomeric to polymeric compounds which may be described via the formula $((Me_2HSiO_{0.5})_kSiO_{4/2})_{1-1000}$ wherein index k is from 0.3 to 4. Such liquid or resinous molecules may contain significant concentrations of SiOH- and/or ($C_1$-$C_6$)-alkoxy-Si groups of up to 10 mol.% related to the silicon atoms.

Specific examples of preferred suitable compounds for component b) in the curable silicone compositions of this invention include

$Me_3SiO\text{-}(MeHSiO)_{2\text{-}650}\text{-}SiMe_3$,

$(MeHSiO)_{4\text{-}7}$,

$HMe_2SiO\text{-}(Me_2SiO)_{0\text{-}300}(MePhSiO)_{0\text{-}300}(MeHSiO)_{1\text{-}650}SiMe_2H$,

$Me_3SiO\text{-}(Me_2SiO)_{0\text{-}300}(MePhSiO)_{0\text{-}300}(MeHSiO)_{2\text{-}650}SiMe_3$,

$Me_3SiO\text{-}(Me_2SiO)_{0\text{-}300}(Ph_2SiO)_{0\text{-}300}(MeHSiO)_{2\text{-}650}SiMe_3$.

The component b) may be used as a single component of one polyorganosiloxane polymer or mixtures thereof.

If an increase of the cure rate is required, it is preferred to use some polyorganosiloxanes b) having $HMe_2SiO_{0,5}$-units or homo MeHSiO-polymers to adjust the cure rate to shorter times.

The component b) has preferably a viscosity at 20°C from 2 to 1000 mPa.s, measured at a shear rate of D=10 $s^{-1}$.

Preferably the crosslinker b) should have at least more than 3 reactive SiH-groups per molecule. So-called chain extenders having in average of >1 to 3 reactive SiH-groups per molecule may be present in addition.

The molar ratio of the total of SiH groups in component b) to the total of the unsaturated hydrocarbyl residues $R^1$ in component a) and if present in b) in the formulation is between 0.7 and 15, preferably 0.8 to 8, more preferably 1.0 to 7, most preferably is 1.0 to 4.

It is further preferred to use polyorganohydrogensiloxanes wherein the molar ratio of $R_2SiO$ : RHSiO units is >1.

The preferred R groups in the polyorganohydrogensiloxanes are methyl, phenyl and 3,3,3-trifluoropropyl. The preferred viscosities are below 1000 mPa.s, more preferred below 400 mPa.s at 20 °C (measured at a shear rate of D=10 $s^{-1}$).

**Component c) reinforcing fillers**

The inventive curable silicone composition may comprise one or more preferably reinforcing filler components, comprising one or more reinforcing silicas or resins, preferably silicone resins. Preferably, the curable silicone composition comprises one or more preferably reinforcing filler components.

Preferably they are selected from the group of fumed silicas having a surface area according to BET of 50 to 400 $m^2/g$.

The fumed silicas are, if appropriate, surface-modified reinforcing fillers c). Reinforcing fillers c) are characterized by a BET surface area of 50 $m^2/g$ or more and primary particle size of < 50 nm. In the context of the present invention the component d) is not comprised by the reinforcing filler c).

Preferably these fillers are surface-hydrophobized. If component c) is used, its amount is preferably up to 100 parts by weight, preferably from 0 to 60 parts by weight, even more preferably from 0 to 50 parts by weight, even more preferably from 5 to 30 parts by weight based on 100 parts by weight of component a), i.e. the polyorganosiloxanes a2).

Fillers having BET surface areas of above 50 $m^2/g$ permit the production of silicone elastomers with improved mechanical properties. In view of strength, electrical resistivity and flame retardancy fumed silicas are preferred, and even more preferred silicas are, for example, Aerosil® 200, 300, 400, HDK® N20 or T30, Cab-O-Sil® MS7 or HS5 having more than 200 $m^2/g$ BET surface area, supplied by Evonik (formerly Degussa), Wacker or Cabot and others.

The fillers c) may be subject of any suitable conventional surface-treatment with suitable surface-treatment agents belonging to reactive silanes or siloxanes as auxiliary additives f). Preferred silanes or siloxanes for the surface treatment are preferably for example silazanes, such as hexamethyldisilazane and/or 1,3-divinyl-tetra-methyldisilazane, in the presence of water, in a preferred embodiment it may take place by an 'in-situ'-hydrophobization of the filler surface. In other embodiments it may also take place with other familiar filler-treatment agents such as poly-organosiloxanediols whose chain lengths are from 2 to 50 and which bear unsaturated organic radicals.

The agent for filler treatment may provide reactive sites for the crosslinking reaction.

In case of the preferred embodiment of curable liquid silicone rubbers the treatment with hexaorganodisilazanes and water and its reaction products are preferred.

Examples of commercially available silicas pre-hydrophobized with various silanes are: Aerosil R 972, R 974, R

976, or R 812, or, for example, HDK 2000 or H30. Rheological properties, i.e. technical processing properties, of the non-cured silicone rubber mixtures may be influenced by the selection the amount of the type of the filler, its amount, and the nature of hydrophobization.

Other fillers named semi- or non-reinforcing fillers which include by way of example all of the fine-particle fillers whose particles size are smaller than 100 μm having a BET surface of < 50 $m^2/g$ are counted under component f) as auxiliary additives.

**Component d) one or more carbon blacks**

The curable silicone compositions according to the invention contain one or more carbon blacks d), which are - preferably exclusively - incorporated into the curable silicone compositions of the invention by mixing the other components of the curable compositions with the non-curable compositions, i.e. the carbon black masterbatch.

The amount of the one or more carbon blacks d) in the curable silicone compositions of the invention is from 0.1 - 2 parts by weight based on 100 parts of the more polyorganosiloxanes a2) having one or more unsaturated groups.

More preferably the amount of the one or more carbon blacks d) in the curable silicone compositions of the invention can be for example from about 0.15 - 2 parts by weight, more preferably 0.2 - 1.5 parts by weight and still more preferably 0.3 - 1 parts by weight each based on hundred parts by weight of the polyorganosiloxanes a2) having one or more unsaturated groups.

Preferably the curable compositions of the invention contain only one kind of carbon black.

Preferably, the curable silicone compositions according to the invention comprise from about 0.1 to about 2.4 wt-% (weight percent), preferably from about 0.3 to about 2.2 weight percent, still more preferably from about 0.5 to about 2.0 weight percent of one or more carbon blacks d) based on the total weight of the curable silicone composition.

As carbon blacks d), basically, all kind of carbon blacks may be used (such as acetylene black, channel black, furnace black, lamp black or thermal black). As it is well known to a skilled person in the art carbon black is a form of paracrystalline carbon that has generally a high surface-area-to-volume ratio, albeit lower than that of activated carbon. It is dissimilar to soot in its much higher surface-area-to-volume ratio and significantly lower (negligible and nonbioavailable) polycyclic aromatic hydrocarbon (PAH) content.

In a preferred embodiment of the invention the at least one dielectric active compound d) is a conductive carbon black, preferably furnace carbon black, i.e. manufactured by the furnace black process.

In a preferred embodiment the one or more carbon blacks d) comprise at least one carbon black selected from conductive carbon blacks having a BET surface of > 30 $m^2/g$ and/or an average primary particle size of $D_{50}$ between 5 to 500 nm.

In a further preferred embodiment, the one or more carbon blacks comprise at least one carbon black selected from conductive carbon blacks having one or more of the following properties:

- a BET surface area of > 100 to 1500 $m^2/g$, more preferably > 100 to 1400 $m^2/g$, more preferably > 100 to 1000 $m^2/g$, more preferably > 250 to 1000 $m^2/g$, more preferably > 500 to 1000 $m^2/g$, and/or
- a primary particle size of $D_{50}$ between 5 to 500 nm, more preferably 10 to 200 nm, and/or
- a DBP pore volume 300-600 ml/100g, more preferably 300-550 ml/100g, more preferably 300-400 ml/100g, and/or
- iodine adsorption 700-1200 mg/g, more preferably 700-1150 mg/g, more preferably 700-1000 mg/g, more preferably 700-900 mg/g, and/or
- pH 8-11, more preferably pH 9-11, more preferably pH 9-10.5 and/or
- metal content < 50 ppm, and/or
- sulphur content < 150 ppm, and/or
- water content < 0.5 wt.%, and/or
- volatiles content < 1 wt.%, and/or
- fines <125 micron in pellets < 10 wt.-%, and/or
- grit content: < 50 mg/kg, and/or
- ash content: < 0.1 wt.-%.

Preferably, only one kind of carbon black is contained in the curable silicone compositions according to the invention.

Commercially available carbon blacks include in particular PrintexXE2, PrintexHV (Evonik), Black Pearls 2000, VulcanoxC72, VulcanoxC72 (Cabot), Ketjen Black EC300J, Ketjen Black EC600JD (Akzo Nobel), Ensaco 360 g, Ensaco 350 g, Ensaco 350 p, Ensaco 250 g (Timcal), CL-08 (Continental Carbon), Denka Black HS100, Denka Black HS100, Denka Black HS100 (Denka Chemicals), CD 7087 (Columbian Chemicals), TokaBlack5500 (TokaiCarbon), Chezacarb A (Unipetrol) etc.

Particularly preferred carbon blacks are conductive carbon blacks marketed under the trademark Ketjenblack

(from Akzo Nobel), especially Ketjenblack EC-300J, and electroconductive carbon black (CAS number 1333-86-4) in the form of pellets.

**Component d1) Other Dielectric Active Compounds (belonging to the auxiliary additives f))**

The curable silicone composition according to the invention may optionally contain apart from the one or more carbon blacks d) other (one or more) dielectric active compounds d1) as auxiliary additives f), which are selected from the group consisting of conductive or semi-conductive fillers.

Such other dielectric active compounds d1) preferably selected from the group of conductive or semi-conductive fillers which comprises e.g. graphite, graphenes, fullerenes, carbon nanotubes, oxides, carbides, ferrites or spinels of Ti, Al, Zn, Fe, Mn, Mo, Ag, Bi, Zr, Ta, B, Sr, Ba, Ca, Mg, Na, K, Si, inorganic salts, such as chlorides, sulfates thereof and are selected from the group of ionic liquids and ionic polymers.

The amount of such other dielectric active compounds can be for example from about 0 - 2 parts by weight, preferably 0.1 to 2 parts by weight, more preferably > 0.15 - 2 parts by weight, more preferably > 0.2 - 1.5 parts by weight and still more preferably > 0.3 - 1 parts by weight each based on hundred parts by weight of the polyorganosiloxanes a2) having one or more unsaturated groups.

The particulate dielectric active compounds have preferably an average diameter $D_{50}$ from 5 to 500 nm, preferred 5 to 200 nm.

$D_{50}$ is measured by light scattering according to ISO 22412:2008. Particles with a diameter according to grit sieve analysis of more than 125 μm should be below 10 wt.% in particular in pellet materials.

Other compounds suitable as component d1) are ionic liquids and ionic polymers which are selected from the group consisting of compounds comprising ammonium, phosphonium, carboxylic, phosphate or sulfonate groups and counter ions such as cations or anions.

Other preferred dielectric active component d1) are selected from the group of titanium dioxide ($TiO_2$), iron and zinc, oxides in particular of spinels and ferrites. In a preferred embodiment the use of ZnO is however not preferred.

The preferred titanium dioxides as dielectric active component d1) have a BET surface range of 35-300 $m^2$/g and particles sizes below 30 nm. For example, fumed $TiO_2$ P25 (Degussa-Evonik) has a number average primary particle size of 21 nm and a BET surface of 50 $m^2$/g. Another $TiO_2$-type is a precipitated anatase (Kronos 7050) has e.g. a BET surface of about 225 $m^2$/g and a number average primary particle /crystallite size of 15 nm,

The use of $TiO_2$ or $Fe_3O_4$ as component d1) are also helpful to enhance the effect on flame retardancy achieved by the crosslinking catalysts based on Pt compounds as component e).

In a preferred embodiment of the invention, the curable silicone composition comprises only the one or more carbon blacks d) as dielectric active compounds.

If, however, any of the dielectric active compounds d1) other than the carbon black d) is present in the curable silicone compositions according to the invention, its amount can be from 0.01 weight percent (wt %) to 1.96 weight percent, preferably 0.05 to 1.90 wt %, more preferred 0.1 to 1.8 wt.%, more preferred 0.15 to 1.7 wt.%, more preferred 0.2 to 1.5 wt.%, more preferred 0.3 to 1.0 wt.%, more preferred 0.3 to 0.7 wt.%, related to the total weight of the curable silicone composition.

In accordance with the present invention the amount and kind of the dielectric active compounds d) (one or more carbon blacks) and d1) (dielectric active compounds other than carbon black), preferably only d), is suitably adjusted such that the cured silicone compositions have in particular such electrical properties making them suitable as insulator for high voltage direct current (HVDC) applications, in particular such that the insulator has a volume resistivity in the range of 25 to 90 °C at an electric field of 10 kV/mm to 30 kV/mm of more than $1*10^{11}$ Ohm*cm, preferably more than $1*10^{12}$ Ohm*cm, more preferably more than $1*10^{13}$ Ohm*cm, still more preferably more than $1*10^{14}$ Ohm*cm, and preferably at most $1*10^{16}$ Ohm*cm. Furthermore, in accordance with the present invention the amount and kind of the dielectric active compounds d) and d1) (preferably only d)) is suitably adjusted such that the inventive cured silicone composition has a temperature dependency of the volume resistivity in the range of 25 to 90 °C at an electric field of 10 kV/mm to 30 kV/mm, such that the ratio of the maximum volume resistivity and the minimum volume resistivity is < 10, and/or the volume resistivity in the range of 25 to 90 °C at an electric field of 10 kV/mm to 30 kV/mm is preferably greater than $1*10^{11}$ Ohm*cm, more preferably greater than $1*10^{13}$ Ohm*cm, more preferably greater than $1*10^{16}$ Ohm*cm, and even more preferred greater than $1*10^{17}$ Ohm*cm, preferably up $1*10^{18}$ Ohm*cm. Furthermore, the inventive cured silicone composition preferably has a volume resistivity in the range of 25 to 90 °C at an electric field of 10 kV/mm to 30 kV/mm between $1*10^{11}$ and $1*10^{18}$ Ohm*cm, preferably between $1*10^{13}$ and $1*10^{18}$ Ohm*cm, more preferably between $1*10^{14}$ and $1*10^{18}$ Ohm*cm, and most preferably between $1*10^{16}$ and $1*10^{18}$ Ohm*cm. Most preferred is a cured silicone composition having a carbon black content of 1.0 to 2.0 wt-% of one or more carbon blacks d) based on the total weight of the curable composition and a volume resistivity in the range of 25 to 90 °C at an electric field of 10 kV/mm to 30 kV/mm between $1*10^{16}$ and $1*10^{18}$ Ohm*cm.

The volume resistivities of the cured silicone compositions are measured according to DIN EN 62631-3-1 with

test sheets of 31 mm effective diameter and thickness of 1 mm.

The measurements were carried out at room temperature unless other temperatures are explicitly mentioned. The electrodes are made of brass and were polished before use. A conductive coating (e.g. silver ink) was not used, since the silicone was well contacted to the electrodes. For polarization a DC source of type PNChp-30000-2 from Heinzinger company was used with a maximum voltage of 30 kV/mm and a maximum current of 2 mA. The minimum detectable current is 1 fA (femtoampere). In the test setup the best resolution was at 10 fA.

**Process for the incorporation of the non-curable silicone composition as defined above (masterbatch) into the curable silicone composition according to the invention**

The carbon black component d) is suitably incorporated into the curable silicone composition of the invention in the form of the non-curable silicone composition according to the invention, i.e. as a masterbatch, for example with a dissolver mixer.

Generally, in case of a hydrosilylation/addition-curable silicone composition according to the invention, they are prepared by producing two parts, one of which comprises the polyorganosiloxanes a2) and the carbon black masterbatch (i.e. the non-curable silicone composition according to the invention), the optional filler component c), the hydrosilylationcatalyst e) and the optional auxiliary additives f), the other comprises the polyorganohydrogensiloxanes b), the optional filler component c) and the optional auxiliary additives f). For curing, these parts are mixed and subsequently heated to obtain the cured silicone composition according to the invention.

**Component e) crosslinking catalyst**

In one preferred embodiment the curing catalyst is selected from the group which consists of 0 - 1000 ppm (related to the sum of the weight amounts of the components a) to d)) of a compound enabling curing by a hydrosilylation reaction.

The curing catalyst e) applied as hydrosilylation catalyst in the invention is selected from the group which consists of metals or metal compounds of Pt, Pd, Rh, Co, Ni, Ir or Ru.

The inventive curable silicone composition contains preferably platinum or at least one platinum compound e) which is acting as a curing catalyst if component b), the SiH-polyorganosiloxane is present and optionally necessary for the required flame retardancy. The possible Pt component e) may be selected for example from usual platinum catalysts components e.g. selected from the group of organo platinum compounds, salts or metals of platinum, with or without a solid carrier such as activated charcoal, carbon, silica powders as taught e.g. in US 3,159,601; US 3,159,662; US 3,419,593; US 3,715,334; US 3,775,452 and US 3,814,730.

The curing reaction by hydrosilylation may of course be initiated by other metals or metal compounds known by people skilled in the art. Other metals may comprise metals or metal compounds of Pd, Rh, Co, Ni, Ir or Ru.

Suitable platinum compounds also include photo-activatable catalysts, including ($\eta$-diolefin)-(sigma-aryl)-platinum complexes (see e.g. US 4,530,879 or US 2003/0199603), $\eta^5$cyclopentadienyl platinum complex compounds or complexes with optionally substituted cyclopentadienyl ligands having sigma-bonded ligands, preferably sigma-bonded alkyl or aryl ligands. Other platinum compounds whose reactivity may be controlled by way for example using azodicarboxylic esters, as disclosed in US 4,640,939 or diketonates may be used also in principle. Platinum compounds capable of being photo-activated that may be used are moreover those selected from the group having ligands selected from diketones. Other Ptcatalysts are mentioned by way of example in US 3,715,334 or US 3,419,593, EP 1 672 031 A1 and Lewis, Colborn, Grade, Bryant, Sumpter, and Scott in Organometallics, 1995, 14, 2202-2213.

The component e) if used for the hydrosilylation reaction of the inventive curable silicone composition acts as a catalyst compound, which catalyzes the reaction of the silicon-bonded hydrogen atoms of component b) with the silicon-bonded olefinic hydrocarbon substituents of component a). The metal or organo metal compound may be any catalytically active metal and is generally a platinum group metal-containing a catalytic active component. Preferably, the metal of component e) is any platinum complex compound.

A typical platinum containing catalyst component in the curable polyorganosiloxane compositions of this invention is any form of platinum (0), (II) or (IV) compounds which are able to form complexes with phosphites. Preferred complexes are Pt-(0)-alkenyl complexes, such alkenyl, cycloalkenyl, alkenylsiloxane such vinylsiloxane, because of its easy dispersibility in polyorganosiloxane compositons.

A particularly useful form of the platinum complexes are the Pt(0)-complexes with aliphatically unsaturated organosilicon compound such as 1,3-divinyltetramethyldisiloxane (Vinyl-$M_2$ or Karstedt catalyst), as disclosed by US 3,419,593 incorporated herein by reference are especially preferred, cyclohexene-Pt, cyclooctadiene-Pt and tetravinyltetramethyl-tetracyclosiloxane (Vinyl-$D_4$). Such catalysts possess best dispersibility in the inventive curable silicone composition(s).

Pt(0)-olefin complexes are prepared by way of example in the presence of 1,3-divinyltetramethyldisiloxane

($M^{Vi}_2$) via reduction of hexachloroplatinic acid or of other platinum chlorides by the way of example by alcohols in the presence of basic compounds such as alkali carbonates or hydroxides (hydrazine reduction products of Pt(IV) and Pt(II) can also be used).

The amount of platinum-containing catalyst component that is used in the curable silicone compositions of this invention as flame retardant additive is limited by two constraints.

On the one side the amount should provide the desired flame resistance on the other side the amount should be as low as possible for cost reasons and balancing reactivity and pot-life under storage.

Therefore, it is preferred to provide a curable polyorganosiloxane composition wherein the platinum concentration is between 1 to 120 ppm, preferably 1 to 100 ppm, more preferably 1-70 ppm, and still more preferably 1-38 ppm (based on metal related to components a) to f)).

Generally, the reactivity of the Pt-catalyst must be controlled in terms of curing time by so-called inhibitors defined as auxiliary additives under component f).

In another embodiment of the invention the curing catalyst e) is selected from the group of 0.1 to 2 wt.-% of an organic peroxide related to a) to f), whereby such organic peroxide is selected from the group which consists of substituted or unsubstituted dialkyl-, alkylaroyl-, diaroyl- peroxides.

Suitable peroxides are peroxides commonly used in <u>H</u>igh <u>C</u>onsistency Silicone <u>R</u>ubber (HCR, HV, HTV) selected from the group of dialkyl-, alkylaroyl, diaroyl peroxides. Preferred peroxides are all peroxides having a half-life period which allows storing mixtures of the inventive curable polyorganosiloxane composition comprising that peroxide at 25 °C for at least more than 10 days preferably more than 30 days without scorching. Scorching means premature curing i.e. either the increase of the Mooney viscosity of more than 20 Mooney units or gelling that is the increase of the loss modulus G" measured in a rheometer up to the level of the elastic modulus G'.

The reactivity for the preferred peroxides is such that the curing of the polymethyl- or polymethylvinylsiloxanes occurs within less than 15 min at a temperature below 180 °C.

Preferred examples of such curing agents are organic peroxides such as bis-benzoyl peroxide, bis o-methyl or p-methyl benzoylperoxide, bis-2,3-, bis-2,4- or bis-2,5-dichlorobenzoyl peroxide, di-tert.-butyl peroxide, preferably used for pressure-less hot air vulcanization and peroxides such as e.g. butyl perbenzoate, dicumyl peroxide $\alpha,\alpha'$-di-(t-butylperoxy) di-isopropylbenzenes and 2,5-bis-(tert.-butylperoxy)-2,5-dimethylhexane for transfer or injection molding under pressure.

The HCR silicone compositions can also be cured with component b) and a hydrosilylation catalyst. In view of flame retardancy it is preferred to use Pt hydrosilylation catalyst as dual additive not only as crosslinking catalyst but also to improve flame retardancy.

**Component f) auxiliary additives**

Optionally the curable silicone composition according to the invention can comprise auxiliary additives f) which are preferably selected from the group consisting of pigments, adhesion promotors, plasticizers, flame retardant additives, solvents, diluents, process aids for the filler treatment and other Dielectric Active Compounds d1) as explained above.

<u>Adhesion promotors</u>

In one embodiment the curable silicone composition according to the invention comprises at least one adhesion promotor. These compounds improve the ability of the inventive composition to adhere onto several surfaces of substrates such as metals, thermoplastic or duromeric plastic surfaces, glass, natural or synthetic textile fibers other ceramic substrates.

The adhesion promotors are preferably employed in amount of 0.1 to 2 wt.% related to component a). Some of the crosslinkers b) may work as adhesion promotor if they exhibit substituents like e.g. aryl, acryl, methylacryl or epoxy groups beside the SiH units. Also some of the nitrogen compounds f) may act as adhesion promotors in particular if alkoxysilyl groups are present.

One preferred class of adhesion promotors is selected from the group which consists of silanes of the formula (3)

$$X\text{-}(CR^9_2)_e\text{-}Y\text{-}(CH_2)_eSiR^9_d(OR^8)_{3-d} \qquad (3)$$

wherein

X is selected from the group consisting of halogen, pseudohalogen, unsaturated aliphatic group with up to 14 carbon atoms, epoxy-group-containing aliphatic group with up to 14 carbon atoms, cyanurate-containing group, and an isocyanurate-containing group,

Y is selected from the group consisting of a single bond, a heteroatomic group selected from -COO-, -O-, -S-, -CONH-,

-HN-CO-NH-,

$R^9$ is selected from hydrogen and R as defined above,

$R^8$ is a C1 -C8 alkyl group is 0, 1 to 8, and may be identical or different,

d is 0, 1 to 2.

Preferred examples of the adhesion promotor of f) include:
gamma-glycidyloxypropyltrialkoxysilanes, (3,4-epoxycyclohexyl)alkyltrialkoxy silanes methacryloxyypropyltrialkoxysilanes, isocyanatopropyltrialkoxysilanes, isocyanatomethyltrialkoxysilanes and vinyltrialkoxysilanes.

Other optional auxiliary additives are used in an amount of 0-15 pt.wt. per 100 pt.wt. of component a). The auxiliary or conventional additives include e.g.: plasticizers, release oils, hydrophobizing oils, such as polydimethylsiloxane, polydiphenyldimethylsiloxane oils having a viscosity that is preferably 0.001-10 Pa.s at 20 °C.

Furthermore, it can be desired to color the layer if present in particular as outer layer with inorganic or organic pigments with lowest amount of pigments, since very often these pigments weaken or impair the mechanical or electrical properties. Additional mould-release or flow improving agents may also be used, examples being fatty acid derivatives or fatty alcohol derivatives, fluoroalkyl surfactants. Compounds advantageously used in this invention are those, which separate rapidly and migrate to the surfaces. Stability after exposure to hot air may by way of example be increased using known hot-air stabilizers, such as Fe-, Mn-, Ti-, Ce- or La-compounds, and organic salts, preferably their organic complexes such as di- or triketonates.

Furthermore, the auxiliary additives f) can include hydrophobizing agents for the treatment of reinforcement filler components c), e.g. organosilanols or organosilazane and water, for example trimethylsilanol, vinyldimethylsilanol, hexamethyldisilazane, 1,3-divinyltetramethyldisilazane.

The auxiliary additives may also include so-called inhibitors for controlling the hydrosilylation crosslinking reaction. In case where the curable silicone composition contains all ingredients for a hydrosilylation reaction i.e. alkenyl groups of a1), SiH groups of b) and platinum or its compounds, the reactions speed should be preferably controlled by inhibitors in order to avoid premature curing of the reactive curable silicone composition at 25 °C before the desired curing and or shaping step for the manufacture of coatings or moulded articles. Inhibitors useful in hydrosilylation reactions are well-known. Examples of advantageous inhibitors include for example vinylsiloxanes, 1,3-divinyltetramethyldisiloxane, or tetravinyl-tetramethyltetracyclosiloxanes. It is also possible to use other known inhibitors, for example alkynols such as ethynylcyclohexanol, 3-methylbutynol, dimethylmaleate, alkyl-,aryl or alkylaryl- phosphines, alkyl-, aryl- or alkylaryl phosphites or alkyl-, aryl- amines are used in accordance with the invention interact with those Pt- compounds, thereby influencing the hydrosilylation activity of the catalyst to provide an excellent balance between storage stability on the one hand and reactivity at elevated temperatures upon curing.

In order to increase the flame retardancy it is preferred to use nitrogen or phosphoric compounds which can enhance the effect of Pt compounds. These flame-retardant additives are selected form the group of azo, hydrazo, triazole, tetrazole, guanidine, melamine, urea or phosphite derivatives.

Solvents and/or Diluents

In a particular embodiment the curable silicone composition according to the invention is suitable for spray applications. In such case the curable silicone composition according to the invention may contain solvents and/or diluents. Such solvents and/or diluents can be selected for example from siloxanes, organic solvents, such as hydrocarbon solvents, ester-based solvent and alcohol-based solvents.

**Other extending fillers or pigments:**

The auxiliary additives may also include other extending fillers. Such other fillers are different from the dielectric active compounds d) or d1). Their use should not impair the effect of the components d) or d1). Additional pigments or extending fillers should only be incorporated as long as they do not interact or impair or suspend the dielectric properties of component d) or d1).

Therefore, extending fillers or pigments can only merely be employed since they may have immediately similar effects as component d) or interact with d). Concentration must be therefore if used below 1 wt.% preferably smaller than 0.1 wt.%.

Typical organic pigments are selected e.g. from the group of perylenes, phthalocyanines organic pigments.

Extending fillers can be selected from the group which consists of silicates, diatomaceous earth, ground silicas, quartz, micas, amorphous carbonates, borates, hydroxides/oxides and oxides of Al, Ca, Mg, Fe, Zn having particle sizes

above those of component d). These abrasive fillers and pigments are preferably semi- or non-reinforcing fillers or pigments whose particle sizes are between 1 to 100 μm having a BET surface of < 30 $m^2/g$.

Since many of these fillers are in addition very often abrasive towards metal nozzles and surfaces in an injection moulding or mixing machine or moulds most of these fillers are omitted for several other reasons. It is part of the inventive concept that the concentration of abrasive fillers should be as low possible in order to increase the life-time of the nozzles in injection molding machines and mold itself. Such abrasive fillers may be tolerated if not abrasive to metal surfaces of nozzles in the injection molding process, but in principle these fillers should be avoided or be less than 3 pt.wt. per 100 parts by weight of component a). Abrasive fillers like ground quartz or cristobalite powders or diatomaceous earth are generally less preferred.

All of the inventive curable silicone compositions are curable by any of the processes known in silicone technology and the related processes for the manufacture of formed shaped articles, including coated articles, which are obtained by spray-coating articles with the inventive curable silicone compositions. The cured material of the inventive curable silicone compositions are elastomers preferably for the use in the manufacture of an insulator for high voltage direct current application. Preferably the inventive curable silicone composition is formed and cured before the assembling of the cable joint or termination with the cable but in general the curing step can be carried out at any point of time in the process chain of assembling cable accessories, i.e. curing and shaping must not happen at the same time.

The present invention relates also to a method for the manufacture of insulators useful for the application in high voltage application, whereby the inventive curable silicone composition is shaped by extrusion through a nozzle or by a mould and curing the shaped composition by heat or light to form a shaped insulator. Such process is optionally carried out in the presence of at least one other silicone material which differs from the inventive curable silicone composition. Such different other materials may be a silicone, a rubber or thermoplastic materials which at least differ in terms of the physical properties and ratios and /or concentrations of the single components a) to f).

The inventive curable silicone composition which has been cured can be used per se as insulating material but preferably is used in combination with other materials well known in the design of HVDC cable accessories. For example, cable joints or cable terminations have very often a multi-layer design, whereby at least one of the materials providing high conductivity is part of the joint as shielding material, e.g. conductive EPDM or conductive silicone rubber or conductive thermoplastic having a volume resistivity below $1*10^4$ Ohm*cm. Some parts of such cable accessories can have the form of a tube or tube-like trumpet and can therefore be manufactured by an extrusion process.

The final insulator needs very often a more complicated assembling of 2 to 4 different materials and therefore is manufactured by assembling of extruded and moulded parts, sometimes the final outer layer is applied as encapsulant by pouring of low viscous silicone rubbers in particular for joints with a big volume under assistance of an optionally open mold cavity.

The inventive curable silicone composition is preferably for the use as cured composition for high voltage direct current application and preferably for the manufacture of cable joints, boots, sleeves, fittings etc. cable accessories, cable terminations.

The cured inventive silicone composition is in particular for the use of the manufacture of a cable joint intended for sealing cable ends of one or more cables having a thermoplastic polyolefin or rubber cable insulation, wherein the cable joint seals cable ends of one or more cables having a thermoplastic polyolefin or rubber cable insulation.

The invention relates also to a method for the manufacture of a cable joint comprising the steps A1) providing at least one conductive shaped silicone composition which differs from the silicone composition according to the invention and which is optionally cured, B1) encapsulating the composition of step A1) with a silicone composition according to the invention in a mould to form and cure a cable joint or cable termination.

The invention relates furthermore to a method for sealing and/or insulating connected cables or closing cable ends by the use of a cable joint as defined before comprising the steps of

j) providing an insulated wire having a thermoplastic or elastomer multi-layered sheath appropriate for direct current insulation and parts of naked wire or connectors,

jj) encapsulating naked or connected wire by putting over onto the surface of an insulating sheath of j)) the holes of a tube-like previously moulded and cured cable joint according as defined before under mechanical extension of the joint in such a way that an overlap between the shaped silicone cable joint and the sheath onto the wire insulation of about more than 0.5 cm is achieved whereby the silicone cable joint seals the sheathed insulation of the insulated wire by mechanical pressure of the relaxed joint forming an encapsulating insulation also for the naked wire and connectors.

This assembling process i.e. the sealing step of one or more insulated cables can be carried out in a way wherein the cable joint or cable termination is stretched by widening the tube-like holes under assistance of pressed air or by stent-like plastic or a metal tool or by means which keep the joint in an extended shape and let it relax under heat like as a

shrinking tube.

Another process according to the invention includes the use of an optional transparent form and start curing after encapsulation of the cable or cables with all materials in the field at temperatures between 0 to 200 °C or under assistance of light and light activatable curing catalysts e).

The cured inventive silicone composition according to the invention have unique electrical properties compared to the cured silicone compositions that are prepared using the conventional - non-extruded - carbon black masterbatch.

In a further embodiment of the invention it relates to a curable silicone composition, comprising:

a) 100 pt.wt. of one or more polyorganosiloxanes a2) having one or more unsaturated groups, preferably one or more alkenyl groups,

b) 0 - 100 pt.wt., preferably > 0 to 100 pt.wt. of a crosslinker component comprising one or more polyorganohydrogensiloxanes,

c) 0 - 100 pt.wt., preferably > 0 to 100 pt.wt. of one or more filler components, comprising one or more reinforcing silicas or resins,

d) more than 2 pt.wt., preferably 4 pt.wt. - 12 pt.wt. of one or more carbon blacks,

e) a curing catalyst selected from the group consisting of a compound enabling hydrosilylation and an organic peroxide, and

f) 0 - 50 pt.wt. of one or more auxiliary additives.

Such curable silicone composition preferably comprises more than 2.4 wt-%, preferably 3 to 10 wt-% of one or more carbon blacks d) based on the total weight of said curable silicone composition.

These high carbon black-load curable compositions can be cured to generally electrically and also thermally conductive silicone compositions and can be used in applications where electrically and/or thermally conductive silicone rubbers are required, such as for the manufacture of connectors, electrically conductive films, electrode materials, heat-radiating materials.

## Examples

All parts are weight parts unless otherwise indicated. All percentages are weight percentages unless otherwise indicated.

## Masterbatch Examples

### Masterbatch Example 1: Preparation of a non-curable master batch comprising carbon black according to the invention

A vinyl terminated linear polydimethylsiloxane having a viscosity of 10 Pa.s at 20 °C and a shear rate of D=10 $s^{-1}$ (component a1) and carbon black Ketjenblack EC 300 J (Akzo) having BET surface 800 m2/g (350 DBP pore volume ml/100g) with a primary particle size of 40 nm (component d) were extruded at 25°C on a co-rotating twin-screw extruder from Leistritz, size ZSE40MAXX having an L/D ratio of 52 (L is the Length of the extruder and D its Diameter) and a screw diameter 41.4 mm. The throughput rates varied from 100 to 175 kg/h. The temperature of the extruded mass raised with increasing carbon black contents and reached above 230°C at very high carbon black contents, despite cylinder cooling.

Carbon black contents were varied from 10 to up to 23 wt-%.

Table 1 - Masterbatch Examples 1-1 to 1-10

| Recipe | Vinyl terminated Polydimethylsilo xane 10 Pa.s (wt-%) - a1) | Carbon black (wt-%) - d) |
|---|---|---|
| **1-1** | 90 | 10 |
| **1-2** | 89 | 11 |
| **1-3** | 88 | 12 |
| **1-4** | 87 | 13 |

(continued)

| Recipe | Vinyl terminated Polydimethylsilo xane 10 Pa.s (wt-%) - a1) | Carbon black (wt-%) - d) |
|---|---|---|
| **1-5** | 86 | 14 |
| **1-6** | 85 | 15 |
| **1-7** | 84 | 16 |
| **1-8** | 83 | 17 |
| **1-9** | 82 | 18 |
| **1-10** | 77 | 23 |

**Masterbatch Comparative Example 1: Preparation of a non-curable master batch comprising carbon black according to Example 1 of WO2016110570A1**

100 kg of a vinyl terminated linear polydimethylsiloxane having a viscosity of 10 Pa.s at 20 °C and a shear rate of D=10 $s^{-1}$ was placed in a planetary mixer and mixed with 12.7 kg carbon black Ketjenblack EC 300 J (Akzo) having BET surface 800 $m^2/g$ (350 DBP pore volume ml/100g) with a primary particle size of 40 nm. This mixture was stirred in a twin blade kneader till a homogeneous mixture was obtained after 45 min.

The homogeneous mixture was then further dispersed over 30 min on a three-roll mill to obtain a dispersion of the carbon black.

Table 2 - Masterbatch (comparative example)

| **Comparative example 1** | | pt.wt. |
|---|---|---|
| Vinyl terminated PDMS 10 Pa.s | a1) | 89.5 |
| Ketjen Black EC300J-batch (11.3 % carbon in Vinyl terminated PDMS 10 Pa.s) | carbon black d) | 10.5 |
| Sum | | 100.0 |

**Particle Size Distribution Measurement of the Master Batches**

The particle size distribution of the carbon black in the non-curable silicone composition of the Masterbatch Example 1 and the Masterbatch Comparative Example 1 were measured by light scattering according to DIN EN ISO/IEC 17025 in toluene solution using the scattering model according to the Mie theory measured at the lowest possible rotational speed of the dispersing unit corresponding to the lowest possible shear using a Malvern Zetasizer apparatus. Figure 14 shows the particle size distribution of the Masterbatch Comparative Example 1 (number percentages) and Figure 15 shows the particle size distribution of the Masterbatch Example 1 (number percentages). As can be seen from the comparison of the two Figures 14 and 15 the inventive Masterbatch Example 1 has a significantly smaller particle size of the carbon black agglomerate particles than the Masterbatch Comparative Example 1. While the inventive Masterbatch Example 1 has almost no particles above 10 μm and particles down to about 1 μm, the Masterbatch Comparative Example 1 has significant parts of particles bigger than 10 μm up to about 100 μm and almost no particles of less than about 3 μm. It is assumed that this different particle size distribution of the inventive masterbatch (non-curable silicone composition) is surprisingly effective to improve the electronic properties of the cured silicone compositions of the invention especially in high voltage direct current applications as described below.

**Examples of curable compositions**

Example SR1 and Comparative Example SR1

Table 3 - Silicone Curable compositions containing the non - curable composition of Example 1 (Ex SR1) and of comparative example 1 (Comparative Example SR1)

| | Example SR1 | | Comparative Example SR1 | |
|---|---|---|---|---|
| **Part** | **A** | **B** | **A** | **B** |
| dimethylvinylsiloxy-terminated polydimethylsiloxane having a viscosity of 10 Pa·s (at 20°C and D=10$s^{-1}$) | 11.1208 | 11.2308 | 11.7745 | 12.2396 |
| dimethylvinylsiloxy-term inated polydimethylsiloxane having a viscosity of 65 Pa·s s (at 20°C and D=10$s^{-1}$) | 20.1389 | 20.3288 | 21.3227 | 22.1549 |
| water | 1.2849 | 1.2706 | 1.3605 | 1.3847 |
| Divinyltetramethyldisilazane | 0.0257 | 0.0249 | 0.0272 | 0.0272 |
| Hexamethyldisilazane | 3.0839 | 3.0630 | 3.2652 | 3.3381 |
| triazole (25 % in water) | 0.0000 | 0.1067 | 0.0000 | 0.1163 |
| Aerosil 300 (silica) | 14.2514 | 14.1576 | 15.0891 | 15.4294 |
| dimethylvinylsiloxy-terminated polydimethylsiloxane having a viscosity of 65 Pa·s (at 20°C and D=10$s^{-1}$) | 0.0000 | 0.0000 | 0.0000 | 0.0000 |
| dimethylvinylsiloxy-terminated polydimethylsiloxane having a viscosity of 10 Pa·s (at 20°C and D=10$s^{-1}$) | 39.1330 | 28.5134 | 41.4332 | 28.1900 |
| **Masterbatch from Example 1 (16 wt-% CB)** | **9.4732** | **9.4729** | 0.0000 | 0.0000 |
| **Masterbatch from Comparative Example 1 (10.5 wt-% CB)** | 0.0000 | 0.0000 | **4.4525** | **4.4491** |
| dimethylvinylsiloxy-term inated poly(dimethylsiloxane-co-methylvinylsiloxane) having a vinyl content of 2.08 mmol/g and a viscosity of 2 Pa·s (at 20°C and D=10$s^{-1}$) | 3.9716 | 0.0000 | 3.9047 | 0.0000 |
| Pt(0) complex with tetramethyl-divinyl-disiloxane that contains 1.5 wt% Pt | 0.2008 | 0.0000 | 0.2126 | 0.0000 |
| linear poly(dimethyl)co(methylhydrogen)s iloxane SiH cross-linker, SiH 4.15 mmol/g, viscosity 0.035 Pa.s (at 20°C and D=10$s^{-1}$) | 0.0000 | 8.9393 | 0.0000 | 9.4025 |
| linear poly(dimethyl)co(methylhydrogen)s iloxane SiH cross-linker, SiH 2.3 mmol/g, viscosity 0.21 Pa.s (at 20°C and D=10$s^{-1}$) | 0.0000 | 5.5359 | 0.0000 | 6.0333 |
| ECH | 0.0000 | 0.1225 | 0.0000 | 0.1335 |
| | | | | |
| total | 100.0000 | 100.0000 | 100.0000 | 99.8837 |
| | | | | |
| SiH/SiVi | 3.31 | | 3.57 | |
| filler cont./% | 14.25 | 14.16 | 15.09 | 15.45 |
| Pt/ppm | 14.76 | | 15.64 | |
| ECH/ppm | | 612.42 | | 667.88 |
| **Carbon black content- /wt.-%** | **1.52%** | | **0.47%** | |

**Example SR1 (curable silicone composition)**

A curable silicone rubber composition SR1 according to the invention was prepared according to the following process:

**Part A**

In a dissolver mixer 9.47 parts carbon black paste according to Masterbatch Example 1, 11.12 parts of a dimethylvinylsiloxy-terminated polydimethylsiloxane having a viscosity of 10 Pa·s at 20°C and at a shear rate of 10 $s^{-1}$ and 20.14 parts of a dimethylvinylsiloxyterminated polydimethylsiloxane having a viscosity of 65 Pa·s (components a2) each) were mixed with 3.08 parts of hexamethyldisilazane (surface treating agent - part of component c)), 0.026 parts of divinyltetramethyldisilazane (surface treating agent - part of component c)) and 1.29 parts of water (additive - component f)). The mixture was then mixed with 14.25 parts of fumed silica having a Brunauer-Emmett-Teller (BET) specific surface area of 300$m^2$/g (Aerosil® 300 from Evonik) (component c)) and heated at 100°C for 1h so that a silica filler with a mixture of trimethylsilyl- and vinyldimethylsilyl groups at its surface was formed. Water and resulting volatile compounds from the surface treatment reaction were subsequently removed from the silicone mixture at ca. 150°C under vacuum (< 80 mbar) for 1h. Resulting volatiles were removed from the silicone mixture at ca. 150°C under vacuum (< 80 mbar) for 1h. The mixture was later cooled down and diluted with 39.13 parts of dimethylvinylsiloxy-terminated polydimethylsiloxane having a viscosity of 10 Pa·s. Subsequently 3.97 parts of a dimethylvinylsiloxy-terminated poly(dimethylsiloxane-comethylvinylsiloxane) having a vinyl content of 2.08 mmol/g and a viscosity of 0.2 Pa·s (component a)) is added. Finally, 0.2 parts of a solution of a Pt(0) complex with tetramethyltetravinylcyclotetrasiloxane that contains 1.5 wt% Pt was added (Ashby catalyst) (component e)).

**Part B**

In a dissolver mixer 9.47 parts carbon black paste according to Masterbatch Example 1, 11.23 parts of a dimethylvinylsiloxy-terminated polydimethylsiloxane (component a2)) having a viscosity of 10 Pa·s and 20.33 parts of a dimethylvinylsiloxyterminated polydimethylsiloxane having a viscosity of 65 Pa·s (component a2)) were mixed with 3.06 parts of hexamethyldisilazane (surface treating agent - part of component c)), 0.025 parts of divinyltetramethyldisilazane (surface treating agent - part of component c)) and 1.27 parts of water (additive - component f)). The mixture was then mixed with 14.15 parts of fumed silica having a Brunauer-Emmett-Teller (BET) specific surface area of 300$m^2$/g (Aerosil® 300 from Evonik) (component c)) and heated at 100°C for 1h so that a silica filler with a mixture of trimethylsilyl- and vinyldimethylsilyl groups at its surface was formed. Water and resulting volatile compounds from the surface treatment reaction were subsequently removed from the silicone mixture at ca. 150°C under vacuum (< 80 mbar) for 1h. Resulting volatiles were removed from the silicone mixture at ca. 150°C under vacuum (< 80 mbar) for 1h. The mixture was later cooled down and diluted with 28.51 parts of a dimethylvinylsiloxy-terminated polydimethylsiloxane having a viscosity of 10 Pa·s. Subsequently, 8.94 parts of a first crosslinker (linear poly(dimethyl)co(methylhydrogen)siloxane with an SiH content at 4.15 mmol/g and a viscosity of 0.035 Pa s (component b)) and 5.54 parts of a second crosslinker (linear poly(dimethyl) co(methylhydrogen)siloxane with an SiH content at 2.30 mmol/g and a viscosity of 0.21 Pa s (component b)), and 0.12 parts of 1-ethynyl-1-cyclohexanol (ECH) (component f)) were added.

Cured silicone rubber compositions according to the invention were prepared as follows: Parts A and B were mixed in a 1:1 weight ratio and cured by heating to 175° C for 10 minutes.

**Comparative Example 1 (curable silicone composition)**

Example SR1 (curable silicone composition) was repeated except that the Masterbatch from Comparative Example 1 is used in the amount given in the Table 3.

**Additional Cured Compositions**

Additional cured compositions were prepared as described for example SR1 and comparative example SR1 above with varying amounts of carbon black using the inventive non-curable master batch carbon black paste and the non-inventive non-curable master batch as described above and subjected to the measurements of various electrical properties as described in the following.

**Volume Resistivities**

The volume resistivities of the cured compositions were measured according to DIN EN 62631-3-1, test sheets of 31 mm effective diameter and thickness of 1 mm for high volume resistivities (higher than about $10^{14}$ Ω·cm). For lower volume resistivities (lower than about $10^{14}$ Ω·cm) the volume resistivities were determined according to ISO1853.

Method conductivity: method according to DIN EN 62631-3-1, test set up according to IEC 60093 (high volume resistivities)

For highly insulating materials, the electrical conductivity or the volume resistivities of the samples of cured compositions with the measurement equipment, the principal structure of which is shown in Figure 3 using a three-electrode arrangement with protective ring. The dimensions of the arrangement are shown in the following table, whereby for each measurement a sample thickness of d = 1 mm was used.

Table: Dimensions of the electrode geometry in Figure 3:

| Dimension according to IEC 60093 | $d_1$ | $d_2$ | $d_3$ | $d_4$ | d | g |
|---|---|---|---|---|---|---|
| Value in mm | 20 | 24 | 31 | 31 | 1 | 3 |

Further parameters of the measurement were:

- Electrode material: Brass
- No use of silver paste as contact support
- Measurement at different voltages according to graphs
- Formula for the calculation of the volume resistivity:

$$\rho_{DC} \approx \frac{U_{DC} \cdot A_{eff}}{d \cdot I_{stat}} \quad \text{mit} \quad A_{eff} = \frac{\pi}{4}(d_1 + g)^2$$

$\rho_{DC}$ = specific volume resistance
$U_{DC}$ = DC voltage
$A_{eff}$ = effective surface of electrode taking into consideration the distance of the protective ring electrode.
d = see Figure 3
$d_1$ = see Figure 3
g = see Figure 3
$I_{stat}$ = current flow in the steady state

The determination of the duration of the measurement is done with a double logarithmic plot of the current over time as principally shown in Figure 4. The stationary state was achieved after 10h, thus the measurement time was globally set to 20h.

The measurements were carried out at room temperature unless other temperatures are explicitly mentioned. The electrodes are made of brass and were polished before use. A conductive coating (e.g. silver ink) was not used, since the silicone was well contacted to the electrodes. For polarization a DC source of type PNChp-30000-2 from Heinzinger company was used with a maximum voltage of 30 kV/mm and a maximum current of 2 mA. The minimum detectable current is 1 fA (femtoamper). In the test setup the best resolution was at 10 fA.

Method conductivity: ISO 1853 (low volume resistivities)

Figure 5 shows the principle set-up for determining the volume resistivity of weakly conductive elastomers with the corresponding dimensions according to ISO 1853.

Further parameters:

- Electrode material: Brass
- No use of silver paste as contact support
- $U_{DC}$ = 60V

The test sample is a stripe with 2cm width and 2mm thickness, distance to between electrodes is 2cm according to ISO norm above. Measurements were carried out at room temperature.

Figure 1 shows the volume resistivities of the cured compositions depending on their carbon black content.

As shown in Figure 1 the inventive cured compositions which are prepared with the inventive carbon black master batch surprisingly show the possibility of a much higher loading before reaching the percolation point and getting conductive than the conventional carbon black master batch (comparative example). This allows the addition of higher

amounts of CB to be added by maintaining electrical strength and insulating properties.

**Breakdown voltage:**

The breakdown voltage of the inventive compositions and the comparative compositions of varying amounts of carbon black was measured according to IEC 60243-2.

Figure 6 shows the measurement arrangement according to IEC 60243-2.

The specific parameters were as follows:

- Max voltage is 100 kV DC
- Sample thickness is 1 mm, diameter 45 mm
- Asymmetric ball plate electrode design
- Room temperature
- Measurement in insulation oil *Shell Diala S3 ZX-I Dried* according to IEC 60243-2.
- Increase of voltage: 4kV/s

To avoid oil uptake the so called short-time (rapid rise) - test according to IEC 60243-2 was applied.

The generator allowed a maximum output voltage of 100 kV in combination with a smoothening capacitor of Cg = 10 nF a maximum output of 140 kV could be achieved. The so-called ripple factor of the DC remained below 1%. The stress voltage is applied with an ohm-capacitive voltage splitter of type VD 150 North Star company with a Standard Divider Ratio of 10000:1 (DC error <0.1%).

The results are shown in Figure 2.

As shown in Figure 2 the breakdown voltage in the inventive cured silicone compositions can be kept well above 50 kV/mm even up to a CB load of 2 wt.-%. This determines the electrical stress resistance under normed circumstances. This parameter is a key factor for the functionality of a cable joint insulation material. Since the percolation of the breakdown occurs earlier than the one of the volume resistivity it is more crucial in the fine tuning of the material. An electrical breakdown of the material causes a failure in the whole cable joint and makes the material unsuitable. A minimum of 40-50 kV/mm shall be reached in the measurement of 1 mm specimen.

**PEA Measurements**

The PEA (Pulsed Electro Acoustic) measurement is used for the localization of charges inside a material, e.g. a silicone sheet. This allows the measurement of charge movements over time inside a material induced by polarization current at certain temperatures. This method is crucial for the development and justification of insulating materials (cable accessories) for HVDC applications. It should be mentioned that all samples had a thickness of 1 mm, and no silicone oil or grease was used at the interfaces of the samples because it was observed that the silicone oil/grease would migrate into the LSR. For each parameter combination, a fresh and depolarized LSR sample was used. In the case of PEA, the acoustic impulse is generated directly at the place of the space charge which allows to determine their position via the speed of the acoustic waves. The electric impulse is a voltage impulse which creates a short-term electrical field $E_p$ inside the sample. It does not cause any further polarization because of the very short time range but exerts coulomb forces onto the space charge and a pressure impulse subsequently. This impulse spreads through the sample as an acoustic wave until reaching a piezo membrane which transforms the acoustic signals back to an electric signature.

Figure 7 shows the schematic PEA test configuration. Therein e(t) stands for the electrical impulse generated to activate an acoustic wave inside the sample as a function of time. The Piezo device which is the detector in this system is back filled with an absorber material in order to delay possible reflections in a way that these do not interfere with the initial wave signals. The initial wave is generated in t0 (see Figure 8) which then moves through the sample and to the Al electrode with known thickness and impedance. The front end of the sample reaches the piezo foil at t1 while the back end arrives at t2. Later signals are intentionally delayed reflections from inside the measurement device (t3, t4).

After correction of the system response and other factors including calibration, the transformation to space coordinates (1D) gives basically the following pattern with a charge density as a function of place (x). The total charge density (Q) can be calculated with

$$Q_{\text{avg}} = \frac{1}{d} \cdot \int_0^d \rho(x) dx$$

*d* = sample thickness

$p$ = charge density

Figure 9 shows the transformation of a voltage oscillogram to a charge density diagram.

(Thickness of sample: 1 mm);
Temperature according as individually mentioned
polarisation current as individually mentioned).

A detailed description of the whole setup and the signal processing of PEA (Pulsed Electro Acoustic) measurement is given in:

1) R. Hussain, J. Moxter and V. Hinrichsen, "Development and optimization of a Pulsed Electroacoustic system suitable for silicone rubbers with carbon black nanofillers," 10th International conference on insulated power cables, Session C4-1, Paris, 2019;
2) R. Hussain and V. Hinrichsen, "Development and Optimization of a Pulsed Electroacoustic System with Temperature Controlled Electrodes," 26th Nordic Insulation Symposium on Materials, Components and Diagnostics, Tampere, Finland, 2019;
3) G.C. Montanari and D. Fabiani, "Evaluation of DC insulation performance based on spacecharge measurements and accelerated life tests," in IEEE Transactions on Dielectrics and Electrical Insulation, vol. 7, no. 3, June 2000, pp. 322-328;
4) Antti Penttinen DESIGN OF PULSED ELECTROACOUSTIC MEASUREMENT SYSTEM FOR SPACE CHARGE CHARACTERISATION, Master Thesis, Lappeenranta University of Technology 2012, and further
5) R. Hussain, PhD thesis "Electrical Characterization of Liquid Silicone Rubber with Carbon Black Nanofiller for HVDC Cable Accessories" TU Darmstadt (will be published in 2020).

The PEA measurement is a method to proof the concept of charge traps which cause a kind of charge barrier that prevents further injection of charges into the material and thus also prevent the cable joint from breakdowns. The higher the amount of charge traps, the stronger the built up of this charge barrier (so called homo-charges). In accordance with the present invention CB is used in particular as a charge trap material because the potential well for the charges is relatively deep and needs high energy to remove charges from that potential well. This allows to maintain charges at the place of injection which itself prevents from further migration into the material as well builds up the mentioned charge barrier.

Figure 10 shows the PEA charge movement diagram of the cured comparative example SR1 (0.47 % CB) at 60°C and polarization times t = 10 s and t =20 h.

Figure 11 shows the PEA charge movement diagram of the cured comparative example SR1 (0.47 % CB) at 20°C and polarization times t = 10 s and t =20 h.

Figures 10 and 11 show that considering the acceptable breakdown voltage and volume resistivity of the comparative example SR1 which allows for a loading of only about 0.5 wt% CB, this amount provides already a reduced movement of charges into the bulk material compared to a non-CB filled LSR (see Figure 12). However, the charge barrier properties of this filling grade are not sufficient for the 525kV cable joint for DC applications.

Figure 12 shows the PEA charge movement diagram of the cured inventive example SR1 (1.52 % CB) and an inventive example SR with a CB-content of 0.75 wt-% and of the non-CB filled cured composition (0 wt.-% CB) at 20°C and 60°C and a polarization time of t =20 h.

The Figure 12 is derived according to the mathematical correlation given in the PhD of R. Hussain (see above reference).

The inventive examples of the cured silicone composition SR1 (Figure 12) show a significantly different behavior than the cured comparative example SR1 (Figure 10 and 11). The non-CB filled LSR allows deepest movement into the bulk material which would cause a breakdown over time under DC conditions. The example shows nearly no movement over time even at elevated temperatures which allows the use as insulating material in DC applications.

Preferably the cured silicone compositions according to the invention SR have in the PEA charge movement diagram determined according to the method described above a movement of any charge < 0.2 mm, preferably < 0.3 mm from one or each electrode.

Preferably the cured silicone compositions according to the invention SR have in a PEA charge movement diagram determined according to the method above a movement of the peak max/min of < 0,05 mm, preferably < 0,1 mm from one or each electrode.

<u>**Total charge accumulation diagram:**</u>

The mean charge density is calculated according to the following equation at a certain time.

$$\rho_{MW}(t_i) = \frac{1}{x_2 - x_1} \int_{x_1}^{x_2} |\rho(x, t_i)| dx$$

The resulting diagram is shown in Figure 13 for the inventive examples SR and varying CB concentrations. The examples with higher CB loading show a steady state after already a few hours where no further accumulation of charges and increase of charge density can occur. The lower concentrations (also the comparative example) have significantly higher final mean charge density values and also reach a steady state much later (0.75% and 1.08% CB) or not even after 20 h (0.5% and 0% CB).

The behavior of the space charges (mobility and max. mean charge density) is finally dependent on the filler loading. However, the inventive CB masterbatch extrusion process (Ex. 1) allows a higher CB loading at volume resistivity and breakdown voltage than the comparative CB masterbatch does.

For a safe operation it is crucial that the steady state (no further increase of the charge density) is reached as quick as possible (Figure 13). The steady state indicates the status when no further charge moves into the silicone elastomer which is intended in DC applications. In addition, the maximum charge density shall remain as low as possible in to have a lowest possible level of injected charges into the silicone material. In such case the homocharges barrier is formed in the most efficient way and avoids any harm of the insulating silicone elastomer.

The cured silicone compositions according to the invention preferably after 5h, more preferably after 2.5h in the total charge accumulation diagram (as shown exemplary in figure 13) show an increase of the mean charge density until a measuring time of 20 hours of less than 20 %, preferably less than 10%, which means that they preferably reach a steady state preferably after 5h more preferably after 2.5h in the total charge accumulation diagram.

The cured silicone compositions according to the invention preferably have a maximum mean charge density in the total charge accumulation diagram (as shown exemplary in figure 13) at or after 20h of < 1.5 C/$m^3$, preferably of < 1.25 C/$m^3$ and most preferably of < 1.0 C/$m^3$.

## Claims

1. A process for the manufacture of a non-curable silicone composition comprising carbon black, said process comprises the extrusion of one or more polyorganosiloxanes a1) with one or more carbon blacks d).

2. A process according the previous claim, wherein the polyorganosiloxanes a1) are selected from polyorganosiloxanes having one or more unsaturated groups, preferably one or more alkenyl groups.

3. A process according to any of the previous claims, wherein the extrusion is carried out with an extruder, such as a multi screw extruder, preferably a twin-screw extruder, more preferably a co-rotating twin-screw extruder.

4. A process according to any of the previous claims, wherein the weight ratio of the weight of the one or more polyorganosiloxanes a1) to weight of the one or more carbon blacks d) is from 90:10 to 75:25, preferably from 89 to 11 to 80 to 20.

5. A non-curable silicone composition obtained by the process as defined by any of the previous claims.

6. A non-curable silicone composition according to any of the previous claims comprising at least 10, preferably at least 11, still more preferably at least 12 weight percent of one or more carbon blacks d) based on the total weight of the entire silicone composition, and/or comprising from 10 to 25, preferably from 11 to 24, still more preferably from 12 to 23 weight percent of one or more carbon blacks d) based on the total weight of the entire silicone composition.

7. A non-curable silicone composition according to any of the previous claims, wherein the percentage of the number of particles less than 10 $\mu$m is more than 70 %, preferably more than 80 %, still more preferably more than 90 %, and/or the percentage of the number of particles of more than 10 $\mu$m is less than 30 %, preferably less than 20 %, still more preferably less than 10 %, still more preferably less than 5 % each as determined by dynamic light scattering, and/or wherein the $Dn_{50}$ of the particle size distribution based on the number of particles of the non-curable silicone composition is less than 7 $\mu$m, preferably less than 5 $\mu$m, and more preferably less than 3 $\mu$m as determined by dynamic light scattering, and/or wherein the $Dn_{90}$ of the particle size distribution based on the number of particles of the non-curable silicone composition is less than 15 $\mu$m, preferably less than 10 $\mu$m, more preferably less than 8 $\mu$m, and most preferably less than 5 $\mu$m as determined by dynamic light scattering.

**8.** Use of the non-curable silicone composition according to any of the previous claims for the manufacture of curable silicone compositions, preferably as a masterbatch for incorporation into curable silicone composition, preferably for use in high voltage direct current applications.

**9.** Curable silicone composition comprising the non-curable silicone composition according to any of the previous claims, preferably comprising:

a) 100 pt.wt. of one or more polyorganosiloxanes a2) having one or more unsaturated groups, preferably one or more alkenyl groups,
b) 0 - 100 pt.wt. of a crosslinker component comprising one or more polyorganohydrogensiloxanes,
c) 0 - 100 pt.wt. of one or more filler components, comprising one or more reinforcing silicas or resins,
d) 0.1 - 3 pt.wt. of one or more carbon blacks,
e) a curing catalyst selected from the group consisting of a compound enabling hydrosilylation and an organic peroxide, and
f) 0 - 50 pt.wt. of one or more auxiliary additives.

**10.** Curable silicone composition according to claim 9, comprising from 0.1 to 2.4 wt-% preferably 0.2 to 2.4 wt-%, more preferably 0.5 to 2.2 wt-%, even more preferred 1.0 to 2.0 wt-%, and even more preferred 1.3 to 1.8 wt-% of one or more carbon blacks d) based on the total weight of the curable composition.

**11.** Cured silicone compositions, obtained by curing the curable silicone compositions according to any of the previous claims 9 to 10.

**12.** Cured silicone compositions according to claim 11,

• having in a Pulsed Electro Acoustic (PEA) charge movement diagram a movement of any charge < 0.2 mm, preferably < 0.3 mm from one or each electrode, and/or
• having in a PEA charge movement diagram a movement of the peak max/min of < 0.05 mm, preferably < 0.1 mm from one or each electrode, and/or
• wherein after 5h, preferably after 2.5h in the total charge accumulation diagram the increase of the mean charge density until a measuring time of 20 hours is less than 20 %, preferably less than 10% (steady state), and/or
• having a maximum mean charge density in the total charge accumulation diagram at or after 20h of < 1.5 C/m$^3$, preferably of < 1.25 C/m$^3$ and most preferably of < 1.0 C/m$^3$,
wherein the Pulsed Electro Acoustic charge movement diagram is determined by a method wherein

- a static polarization phase takes place prior to the generation of an electrical pulse;
- an initial electric impulse being a voltage impulse is generated at the point in time $t_n$ after start of electrical polarization at constant temperature and a constant field strength and exerts coulomb forces onto the space charge which were moved by the prior electrical polarization and a pressure impulse subsequently;
- this impulse spreads through the sample and an Al electrode with known thickness and impedance as an acoustic wave until reaching a piezo membrane which transforms the acoustic signals back to an electric signature;
- the Piezo device being the detector in this system is back filled with an absorber material in order to delay possible reflections in a way that these do not interfere with the initial wave signals;
- the front end of the sample reaches the piezo foil at t1 while the back end arrives at t2;
- after correction of the system response and other factors including calibration, the transformation to space coordinates (1D) gives a pattern with a charge density as a function of place (x), wherein the total charge density (Q) can be calculated with the equation

$$Q_{\text{avg}} = \frac{1}{d} \cdot \int_0^d \rho(x)dx$$

wherein *d* = sample thickness and
$\rho$ = charge density,
and wherein further

- all samples have a thickness of 1 mm,
- no silicone oil or grease is used at the interfaces of the samples,
- for each parameter combination, a fresh and depolarized liquid silicone rubber sample is used,
- the acoustic impulse is generated directly at the place of the space charge which allows to determine their position via the speed of the acoustic waves.

**13.** Cured silicone compositions according to any of claims 11 to 12, having a volume resistivity in the range of 25 to 90 °C at an electric field of 10 kV/mm to 30 kV/mm of preferably greater than $1*10^{11}$ Ohm*cm, more preferably greater than $1*10^{13}$ Ohm*cm, more preferably greater than $1*10^{16}$ Ohm*cm, and even more preferred greater than $1*10^{17}$ Ohm*cm, preferably up to $1*10^{18}$ Ohm*cm, and/or
having a volume resistivity in the range of 25 to 90 °C at an electric field of 10 kV/mm to 30 kV/mm of between $1*10^{11}$ and $1*10^{19}$ Ohm*cm, preferably between $1*10^{11}$ and $1*10^{18}$ Ohm*cm, preferably between $1*10^{13}$ and $1*10^{18}$ Ohm*cm, more preferably between $1*10^{14}$ and $1*10^{18}$ Ohm*cm, and most preferably between $1*10^{16}$ and $1*10^{18}$ Ohm*cm.

**14.** An insulator or a field grading assembly for high voltage direct current application which is obtained by curing the curable silicone composition according to any of the previous claims.

**15.** Curable composition comprising the non-curable silicone composition according to any of the previous claims, comprising:

a) 100 pt.wt. of one or more polyorganosiloxanes a2) having one or more unsaturated groups, preferably one or more alkenyl groups,
b) 0 - 100 pt.wt. of a crosslinker component comprising one or more polyorganohydrogensiloxanes,
c) 0 - 100 pt.wt. of one or more filler components, comprising one or more reinforcing silicas or resins,
d) more than 2 pt.wt., preferably 4 pt.wt. - 12 pt.wt. of one or more carbon blacks,
e) a curing catalyst selected from the group consisting of a compound enabling hydrosilylation and an organic peroxide, and
f) 0 - 50 pt.wt. of one or more auxiliary additives.

and cured silicone compositions obtained by curing said curable silicone compositions.

**Patentansprüche**

**1.** Verfahren zur Herstellung einer nicht härtbaren Silikonzusammensetzung, die Ruß enthält, wobei das Verfahren das Extrudieren eines oder mehrerer Polyorganosiloxane a1) mit einem oder mehreren Rußarten d) umfasst.

**2.** Verfahren nach dem vorstehenden Anspruch, wobei die Polyorganosiloxane a1) aus Polyorganosiloxanen mit einer oder mehreren ungesättigten Gruppen, vorzugsweise einer oder mehreren Alkenylgruppen, ausgewählt sind.

**3.** Verfahren nach einem der vorstehenden Ansprüche, wobei die Extrusion mit einem Extruder, wie beispielsweise einem Mehrschneckenextruder, vorzugsweise einem Doppelschneckenextruder, noch bevorzugter einem gleichläufigen Doppelschneckenextruder, durchgeführt wird.

**4.** Verfahren nach einem der vorstehenden Ansprüche, wobei das Gewichtsverhältnis des Gewichts des einen oder der mehreren Polyorganosiloxane a1) zum Gewicht des einen oder der mehreren Rußpartikel d) zwischen 90:10 und 75:25, vorzugsweise zwischen 89:11 und 80:20, liegt.

**5.** Eine nicht härtbare Silikonzusammensetzung, erhalten durch das Verfahren gemäß einem der vorstehenden Ansprüche.

**6.** Eine nicht härtbare Silikonzusammensetzung gemäß einem der vorstehenden Ansprüche, die mindestens 10, vorzugsweise mindestens 11, noch bevorzugter mindestens 12 Gewichtsprozent eines oder mehrerer Rußarten d), bezogen auf das Gesamtgewicht der gesamten Silikonzusammensetzung, und/oder 10 bis 25, vorzugsweise 11 bis 24, noch bevorzugter 12 bis 23 Gewichtsprozent eines oder mehrerer Rußarten d) bezogen auf das Gesamtgewicht der gesamten Silikonzusammensetzung enthält.

**7.** Eine nicht härtbare Silikonzusammensetzung gemäß einem der vorstehenden Ansprüche, wobei der prozentuale Anteil der Partikel mit weniger als 10 μm mehr als 70 %, vorzugsweise mehr als 80 %, noch bevorzugter mehr als 90 % beträgt, und/oder der prozentuale Anteil der Partikel mit mehr als 10 μm weniger als 30 %, vorzugsweise weniger als 20 %, noch bevorzugter weniger als 10 %, am meisten bevorzugt weniger als 5 % beträgt, jeweils bestimmt durch dynamische Lichtstreuung,

und/oder wobei die $Dn_{50}$ der Partikelgrößenverteilung, bezogen auf die Anzahl der Partikel der nicht härtbaren Silikonzusammensetzung, weniger als 7 μm, vorzugsweise weniger als 5 μm und noch bevorzugter weniger als 3 μm beträgt, bestimmt durch dynamische Lichtstreuung,
und/oder wobei die $Dn_{90}$ der Partikelgrößenverteilung, bezogen auf die Partikelanzahl der nicht härtbaren Silikonzusammensetzung, weniger als 15 μm, vorzugsweise weniger als 10 μm, noch bevorzugter weniger als 8 μm und am meisten bevorzugt weniger als 5 μm beträgt, bestimmt durch dynamische Lichtstreuung.

**8.** Verwendung der nicht härtbaren Silikonzusammensetzung gemäß einem der vorstehenden Ansprüche zur Herstellung von härtbaren Silikonzusammensetzungen, vorzugsweise als Masterbatch zur Einarbeitung in eine härtbare Silikonzusammensetzung, vorzugsweise zur Verwendung in Hochspannungs-Gleichstromanwendungen.

**9.** Härtbare Silikonzusammensetzung, die die nicht härtbare Silikonzusammensetzung gemäß einem der vorstehenden Ansprüche enthält , vorzugsweise umfassend:

a) 100 Gew.-Teile eines oder mehrerer Polyorganosiloxane a2) mit einer oder mehreren ungesättigten Gruppen, vorzugsweise einer oder mehreren Alkenylgruppen,
b) 0 - 100 Gew.-Teile einer Vernetzerkomponente, die ein oder mehrere Polyorganohydrogensiloxane umfasst,
c) 0 - 100 Gew.-Teile einer oder mehrerer Füllstoffkomponenten, umfassend eine oder mehrere verstärkende Siliciumdioxide oder Harze,
d) 0,1 - 3 Gew.-Teile eines oder mehrerer Rußpartikel,
e) einen Härtungskatalysator, ausgewählt aus der Gruppe bestehend aus einer Verbindung, die eine Hydrosilylierung ermöglicht, und einem organischen Peroxid, und
f) 0 - 50 Gew.-% eines oder mehrerer Hilfsadditive.

**10.** Härtbare Silikonzusammensetzung nach Anspruch 9, umfassend 0,1 bis 2,4 Gew.-%, vorzugsweise 0,2 bis 2,4 Gew.-%, noch bevorzugter 0,5 bis 2,2 Gew.-%, am meisten bevorzugt 1,0 bis 2,0 Gew.-% und am meisten bevorzugt 1,3 bis 1,8 Gew.-% eines oder mehrerer Rußarten d) bezogen auf das Gesamtgewicht der härtbaren Zusammensetzung.

**11.** Gehärtete Silikonzusammensetzungen, erhalten durch Aushärten der härtbaren Silikonzusammensetzungen gemäß einem der vorstehenden Ansprüche 9 bis 10.

**12.** Gehärtete Silikonzusammensetzungen gemäß Anspruch 11,

- die in einem Pulsed Electro Acoustic (PEA)-Ladungsbewegungsdiagramm eine Bewegung einer beliebigen Ladung von < 0,2 mm, vorzugsweise < 0,3 mm von einer oder jeder Elektrode aufweisen, und/oder
- die in einem PEA-Ladungsbewegungsdiagramm eine Bewegung des Spitzenwerts max/min von < 0,05 mm, vorzugsweise < 0,1 mm von einer oder jeder Elektrode aufweisen, und/oder
- wobei nach 5 h, vorzugsweise nach 2,5 h, im Gesamtladungsakkumulationsdiagramm der Anstieg der mittleren Ladungsdichte bis zu einer Messzeit von 20 Stunden weniger als 20 %, vorzugsweise weniger als 10 % beträgt (stationärer Zustand), und/oder
- mit einer maximalen mittleren Ladungsdichte im Gesamtladungsakkumulationsdiagramm nach 20 Stunden von < 1,5 $C/m^3$, vorzugsweise von < 1,25 $C/m^3$ und am bevorzugtesten von < 1,0 $C/m^3$,

wobei das Diagramm der gepulsten elektroakustischen Ladungsbewegung durch ein Verfahren bestimmt wird, bei dem

- vor der Erzeugung eines elektrischen Impulses eine statische Polarisationsphase stattfindet;
- ein anfänglicher elektrischer Impuls in Form eines Spannungsimpulses zum Zeitpunkt $t_n$ nach Beginn der elektrischen Polarisation bei konstanter Temperatur und konstanter Feldstärke erzeugt wird und Coulomb-Kräfte auf die Raumladung ausübt, die durch die vorherige elektrische Polarisation und einen nachfolgenden Druckimpuls verschoben wurde;
- dieser Impuls sich als Schallwelle durch die Probe und eine Al-Elektrode mit bekannter Dicke und

Impedanz ausbreitet, bis er eine Piezomembran erreicht, die die akustischen Signale wieder in ein elektrisches Signal umwandelt;
- die Piezo-Vorrichtung, die in diesem System als Detektor dient, mit einem Absorbermaterial hinterfüllt ist, um mögliche Reflexionen so zu verzögern, dass diese die ursprünglichen Wellensignale nicht stören;
- die Vorderseite der Probe die Piezofolie zum Zeitpunkt t1 erreicht, während die Rückseite zum Zeitpunkt t2 eintrifft;
- nach Korrektur der Systemantwort und anderer Faktoren, einschließlich der Kalibrierung, die Umwandlung in Raumkoordinaten (1D) ein Muster mit einer Ladungsdichte als Funktion des Ortes (x) ergibt, wobei die Gesamtladungsdichte (Q) mit der folgenden Gleichung berechnet werden kann

$$Q_{\mathbf{avg}} = \frac{1}{d} \cdot \int_0^d \rho(x)dx$$

wobei $d$ = Probendicke und
$\rho$ = Ladungsdichte,
und wobei ferner

- alle Proben eine Dicke von 1 mm haben,
- an den Grenzflächen der Proben kein Silikonöl oder -fett verwendet wird,
- für jede Parameterkombination eine frische und depolarisierte flüssige Silikonkautschukprobe verwendet wird,
- der akustische Impuls direkt an der Stelle der Raumladung erzeugt wird, was es ermöglicht, deren Position über die Geschwindigkeit der Schallwellen zu bestimmen.

**13.** Ausgehärtete Silikonmassen gemäß einem der Ansprüche 11 bis 12, die bei einem elektrischen Feld von 10 kV/mm bis 30 kV/mm im Bereich von 25 bis 90 °C einen spezifischen Volumenwiderstand von vorzugsweise mehr als $1*10^{11}$ Ohm*cm, noch bevorzugter größer als $1*10^{13}$ Ohm*cm, noch bevorzugter größer als $1*10^{18}$ Ohm*cm und am meisten bevorzugt größer als $1*10^{17}$ Ohm*cm, vorzugsweise bis zu $1*10^{18}$ Ohm*cm aufweisen, und/oder
einen spezifischen Volumenwiderstand bei einem elektrischen Feld von 10 kV/mm bis 30 kV/mm im Bereich von 25 bis 90 °C zwischen $1*10^{11}$ und $1*10^{19}$ Ohm*cm, vorzugsweise zwischen $1*10^{11}$ und $1*10^{18}$ Ohm*cm, vorzugsweise zwischen $1*10^{13}$ und $1*10^{18}$ Ohm*cm, noch bevorzugter zwischen $1*10^{14}$ und $1*10^{18}$ Ohm*cm und am meisten bevorzugt zwischen $1*10^{18}$ und $1*10^{18}$ Ohm*cm aufweisen.

**14.** Eine Isolator- oder Feldgradierungsbaugruppe für Hochspannungs-Gleichstromanwendungen, die durch Aushärten der härtbaren Silikonmasse gemäß einem der vorstehenden Ansprüche erhalten wird.

**15.** Härtbare Zusammensetzung, die die nicht härtbare Silikonzusammensetzung gemäß einem der vorstehenden Ansprüche umfasst, bestehend aus:

a) 100 Gew.-Teile eines oder mehrerer Polyorganosiloxane a2) mit einer oder mehreren ungesättigten Gruppen, vorzugsweise einer oder mehreren Alkenylgruppen,
b) 0 - 100 Gew.-Teile einer Vernetzerkomponente, die ein oder mehrere Polyorganohydrogensiloxane umfasst,
c) 0 - 100 Gew.-Teile einer oder mehrerer Füllstoffkomponenten, umfassend eine oder mehrere verstärkende Siliciumdioxide oder Harze,
d) mehr als 2 Gew.-%, vorzugsweise 4 Gew.-% - 12 Gew.-% eines oder mehrerer Rußpartikel,
e) einen Härtungskatalysator, ausgewählt aus der Gruppe bestehend aus einer Verbindung, die eine Hydrosilylierung ermöglicht, und einem organischen Peroxid, und
f) 0 - 50 Gew.-% einer oder mehrerer Hilfsadditive

sowie gehärtete Silikonzusammensetzungen, die durch Härten der genannten härtbaren Silikonzusammensetzungen erhalten werden.

## Revendications

**1.** Procédé de fabrication d'une composition de silicone non durcissable comprenant du noir de carbone, ledit procédé

comprenant l'extrusion d'un ou plusieurs polyorganosiloxanes a1) avec un ou plusieurs noirs de carbone d).

2. Procédé selon la revendication précédente, dans lequel les polyorganosiloxanes a1) sont choisis parmi les polyorganosiloxanes comportant un ou plusieurs groupes insaturés, de préférence un ou plusieurs groupes alcényles.

3. Procédé selon l'une quelconque des revendications précédentes, dans lequel l'extrusion est réalisée à l'aide d'une extrudeuse, telle qu'une extrudeuse à vis multiples, de préférence une extrudeuse à double vis, plus préférablement une extrudeuse à double vis co-rotatives.

4. Procédé selon l'une quelconque des revendications précédentes, dans lequel le rapport pondéral entre le poids du ou des polyorganosiloxanes a1) et le poids du ou des noirs de carbone d) est compris entre 90:10 et 75:25, de préférence entre 89:11 et 80:20.

5. Composition de silicone non durcissable obtenue par le procédé défini dans l'une quelconque des revendications précédentes.

6. Composition de silicone non durcissable selon l'une quelconque des revendications précédentes, comprenant au moins 10 %, de préférence au moins 11 %, et encore plus préférablement au moins 12 % en poids d'un ou plusieurs noirs de carbone d) par rapport au poids total de l'ensemble de la composition de silicone, et/ou comprenant de 10 à 25 %, de préférence de 11 à 24 %, et encore plus préférablement de 12 à 23 % en poids d'un ou plusieurs noirs de carbone d), par rapport au poids total de l'ensemble de la composition de silicone.

7. Composition de silicone non durcissable selon l'une quelconque des revendications précédentes, dans laquelle le pourcentage du nombre de particules inférieures à 10 μm est supérieur à 70 %, de préférence supérieur à 80 %, mieux encore supérieur à 90 %, et/ou le pourcentage du nombre de particules de plus de 10 μm est inférieur à 30 %, de préférence inférieur à 20 %, mieux encore inférieur à 10 %, et de préférence encore inférieur à 5 %, chacun tel que déterminé par diffusion dynamique de la lumière, et/ou dans laquelle le $Dn_{50}$ de la distribution granulométrique basée sur le nombre de particules de la composition de silicone non durcissable est inférieur à 7 μm, de préférence inférieur à 5 μm, et plus préférablement inférieur à 3 μm, tel que déterminé par diffusion dynamique de la lumière,
et/ou dans laquelle le $Dn_{90}$ de la distribution granulométrique, basée sur le nombre de particules de la composition de silicone non durcissable, est inférieur à 15 μm, de préférence inférieur à 10 μm, plus préférablement inférieur à 8 μm, et le plus préférablement inférieur à 5 μm, tel que déterminé par diffusion dynamique de la lumière.

8. Utilisation de la composition de silicone non durcissable selon l'une quelconque des revendications précédentes pour la fabrication de compositions de silicone durcissables, de préférence sous forme de mélange-maître destiné à être incorporé dans une composition de silicone durcissable, de préférence en vue d'une utilisation dans des applications à courant continu haute tension.

9. Composition de silicone durcissable comprenant la composition de silicone non durcissable selon l'une quelconque des revendications précédentes, comprenant de préférence:

   a) 100 parties en poids d'un ou plusieurs polyorganosiloxanes a2) comportant un ou plusieurs groupes insaturés, de préférence un ou plusieurs groupes alcényles,
   b) 0 à 100 parties en poids d'un composant réticulant comprenant un ou plusieurs polyorganohydrogénosiloxanes,
   c) 0 à 100 parties en poids d'un ou plusieurs composants de charge, comprenant une ou plusieurs silices ou résines de renforcement,
   d) 0,1 à 3 % en poids d'un ou plusieurs noirs de carbone,
   e) un catalyseur de durcissement choisi parmi le groupe constitué d'un composé permettant l'hydrosilylation et d'un peroxyde organique, et
   f) 0 à 50 % en poids d'un ou plusieurs additifs auxiliaires.

10. Composition de silicone durcissable selon la revendication 9, comprenant de 0,1 à 2,4 % en poids, de préférence de 0,2 à 2,4 % en poids, plus préférablement de 0,5 à 2,2 % en poids, encore plus préférablement de 1,0 à 2,0 % en poids, et encore plus préférablement de 1,3 à 1,8 % en poids d'un ou plusieurs noirs de carbone d) par rapport au poids total de la composition durcissable.

11. Compositions de silicone durcies, obtenues par durcissement des compositions de silicone durcissables selon l'une

quelconque des revendications 9 à 10 précédentes.

**12.** Compositions de silicone durcies selon la revendication 11,

• présentant, dans un diagramme de déplacement de charge électroacoustique pulsé (PEA), un déplacement de toute charge de < 0,2 mm, de préférence de < 0,3 mm, par rapport à une ou à chaque électrode, et/ou
• présentant, dans un diagramme de mouvement de charge PEA, un déplacement du pic max/min de < 0,05 mm, de préférence < 0,1 mm par rapport à une ou à chaque électrode, et/ou
• dans lesquelles, après 5 h, de préférence après 2,5 h, dans le diagramme d'accumulation de charge totale, l'augmentation de la densité de charge moyenne jusqu'à un temps de mesure de 20 heures est inférieure à 20 %, de préférence inférieure à 10 % (état stationnaire), et/ou
• présentant une densité de charge moyenne maximale dans le diagramme d'accumulation de charge totale à 20 h ou après de < 1,5 C/m$^3$, de préférence de < 1,25 C/m$^3$ et de préférence encore de < 1,0 C/m$^3$,

dans lequel le diagramme de mouvement de charge électroacoustique pulsé est déterminé par un procédé dans lequel

- une phase de polarisation statique a lieu avant la génération d'une impulsion électrique;
- une impulsion électrique initiale, sous forme d'impulsion de tension, est générée à l'instant $t_n$ après le début de la polarisation électrique à température constante et à intensité de champ constante, et exerce des forces de Coulomb sur la charge spatiale déplacée par la polarisation électrique précédente, suivie d'une impulsion de pression;
- cette impulsion se propage à travers l'échantillon et une électrode en aluminium d'épaisseur et d'impédance connues sous forme d'onde acoustique jusqu'à atteindre une membrane piézoélectrique qui retransforme les signaux acoustiques en une signature électrique;
- le dispositif piézoélectrique, qui fait office de détecteur dans ce système, est rempli à l'arrière d'un matériau absorbant afin de retarder les éventuelles réflexions de manière à ce qu'elles n'interfèrent pas avec les signaux de l'onde initiale;
- l'extrémité avant de l'échantillon atteint la feuille piézoélectrique à t1 tandis que l'extrémité arrière arrive à t2;
- après correction de la réponse du système et d'autres facteurs, y compris l'étalonnage, la transformation en coordonnées spatiales (1D) donne un profil de densité de charge en fonction de la position (x), dans lequel la densité de charge totale (Q) peut être calculée à l'aide de l'équation

$$Q_{\mathrm{avg}} = \frac{1}{d} \cdot \int_0^d \rho(x) dx$$

où *d* = épaisseur de l'échantillon et
$\rho$ = densité de charge,
et où, en outre

- tous les échantillons ont une épaisseur de 1 mm,
- aucune huile de silicone ni graisse n'est utilisée aux interfaces des échantillons,
- pour chaque combinaison de paramètres, on utilise un échantillon de caoutchouc de silicone liquide,
- l'impulsion acoustique est générée directement à l'emplacement de la charge d'espace, ce qui permet de déterminer leur position via la vitesse des ondes acoustiques.

**13.** Compositions de silicone durcies selon l'une quelconque des revendications 11 à 12, présentant une résistivité volumique dans la plage de 25 à 90 °C sous un champ électrique de 10 kV/mm à 30 kV/mm, de préférence supérieure à 1*10$^{11}$ Ohm*cm, de préférence supérieure à 1*10$^{13}$ Ohm*cm, de préférence supérieure à 1*10$^{16}$ Ohm*cm, et de préférence encore supérieure à 1*10$^{17}$ Ohm*cm, de préférence jusqu'à 1*10$^{18}$ Ohm*cm, et/ou
ayant une résistivité volumique dans la plage de 25 à 90 °C sous un champ électrique de 10 kV/mm à 30 kV/mm comprise entre 1*10$^{11}$ et 1*10$^{19}$ Ohm*cm, de préférence entre 1*10$^{11}$ et 1*10$^{18}$ Ohm*cm, de préférence comprise entre 1*10$^{13}$ et 1*10$^{18}$ Ohm*cm, plus préférablement comprise entre 1*10$^{14}$ et 1*10$^{18}$ Ohm*cm, et le plus préférablement comprise entre 1*10$^{18}$ et 1*10$^{18}$ Ohm*cm.

**14.** Isolateur ou ensemble de gradation de champ destiné à une application en courant continu haute tension, obtenu par durcissement de la composition de silicone durcissable selon l'une quelconque des revendications précédentes.

**15.** Composition durcissable comprenant la composition de silicone non durcissable selon l'une quelconque des revendications précédentes, comprenant:

a) 100 parties en poids d'un ou plusieurs polyorganosiloxanes a2) comportant un ou plusieurs groupes insaturés, de préférence un ou plusieurs groupes alcényles,
b) 0 à 100 parties en poids d'un composant réticulant comprenant un ou plusieurs polyorganohydrogénosiloxanes,
c) 0 à 100 parties en poids d'un ou plusieurs composants de charge, comprenant une ou plusieurs silices ou résines de renforcement,
d) plus de 2 % en poids, de préférence 4 % en poids à 12 % en poids d'un ou plusieurs noirs de carbone,
e) un catalyseur de durcissement choisi dans le groupe constitué d'un composé permettant l'hydrosilylation et d'un peroxyde organique, et
f) 0 à 50 % en poids d'un ou plusieurs additifs auxiliaires.

et des compositions de silicone durcies obtenues par durcissement desdites compositions de silicone durcissables.

**Figure 1**

Volume resistivities:

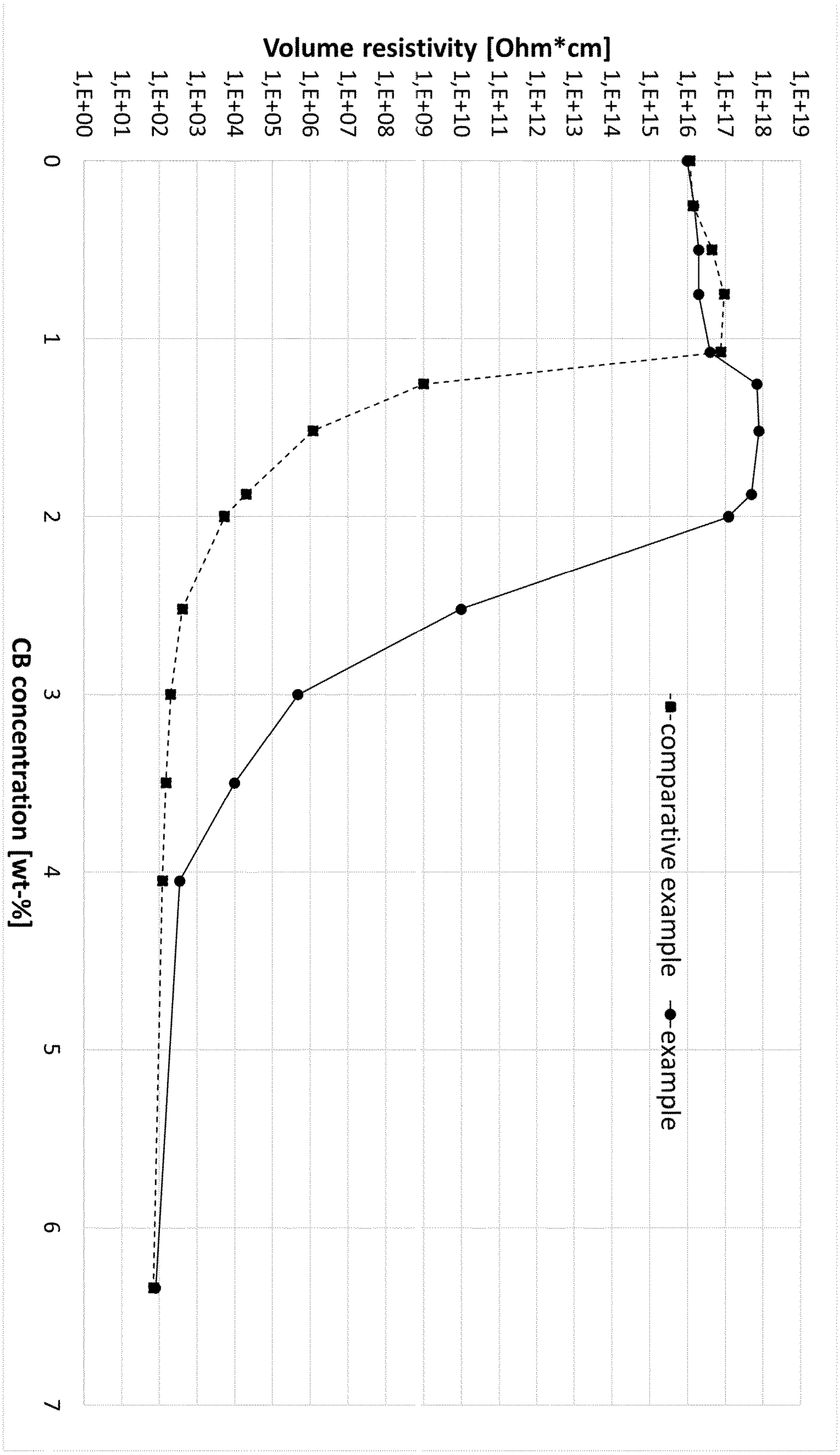

**Figure 2**

Breakdown Voltage:

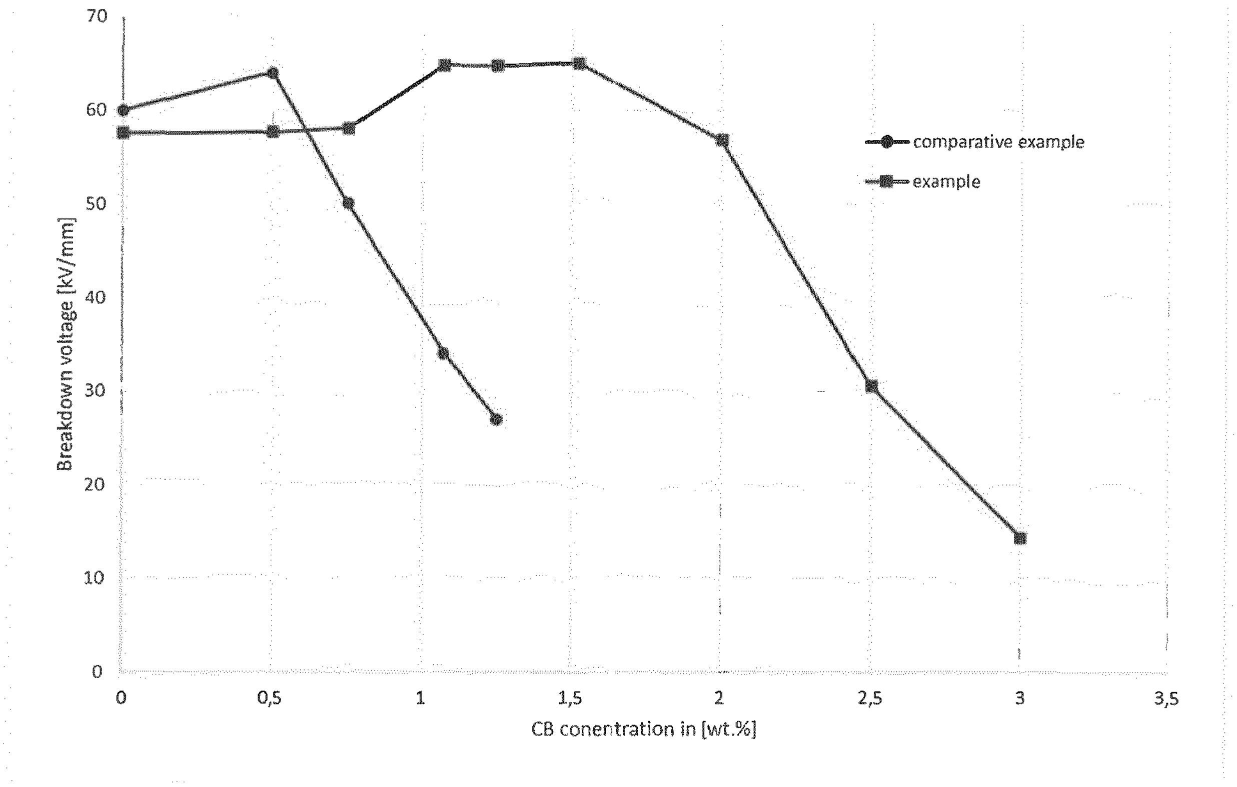


**Figure 3**

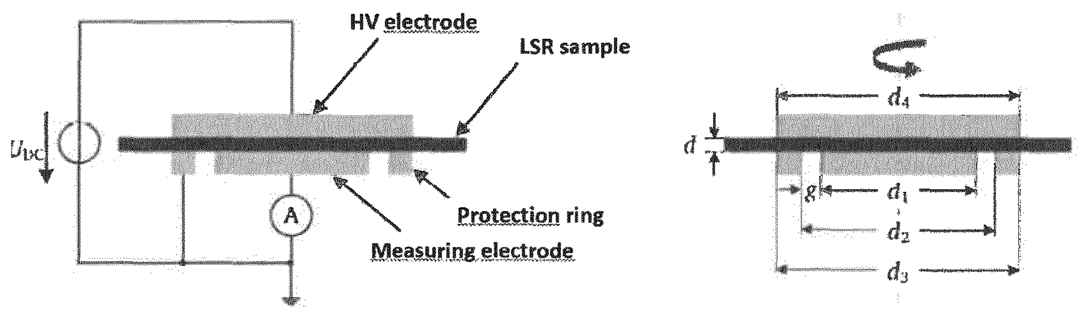


Basic structure for determining the volume resistance (left) with a three-electrode arrangement and dimensions to IEC 60093 (right)

Figure 4

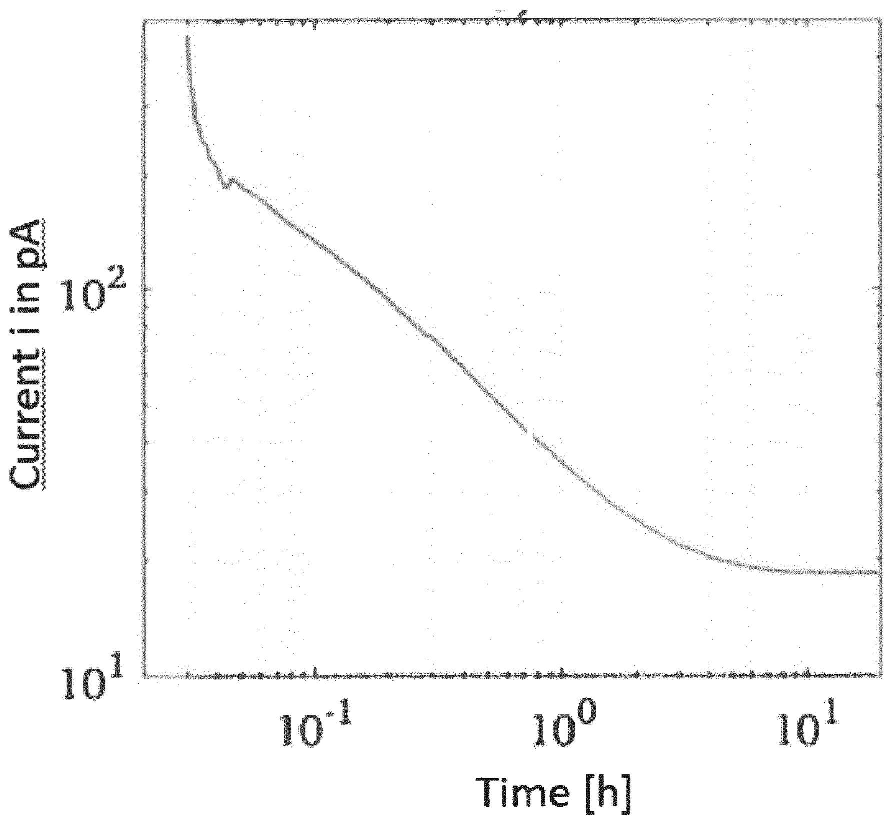


Double logarithmic plot of the current over time (to determine the stationary state)

Figure 5

$$\rho_{DC} = \frac{bd \cdot U_{detect}}{a \cdot I_{detect}}$$

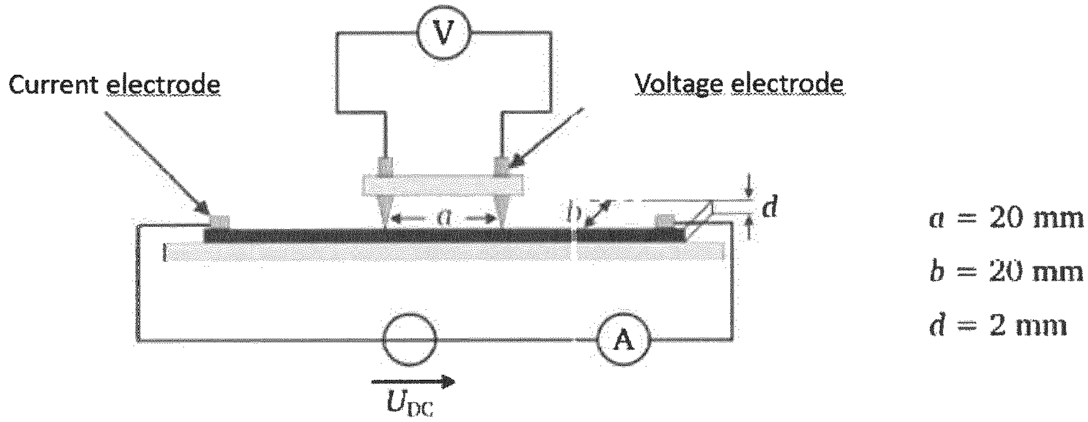


Principle set-up for determining the volume resistivity of weakly conductive elastomers with the corresponding dimensions according to [ISO 1853]

Figure 6

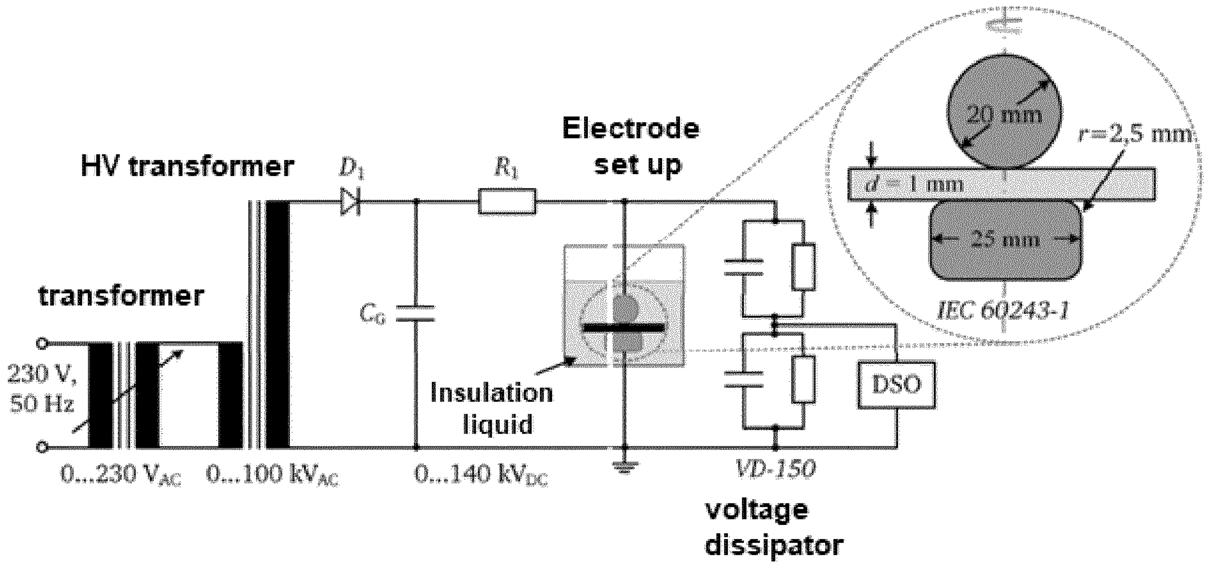


Measurement arrangement according to IEC 60243-2 to determine the breakdown voltage.

Figure 7

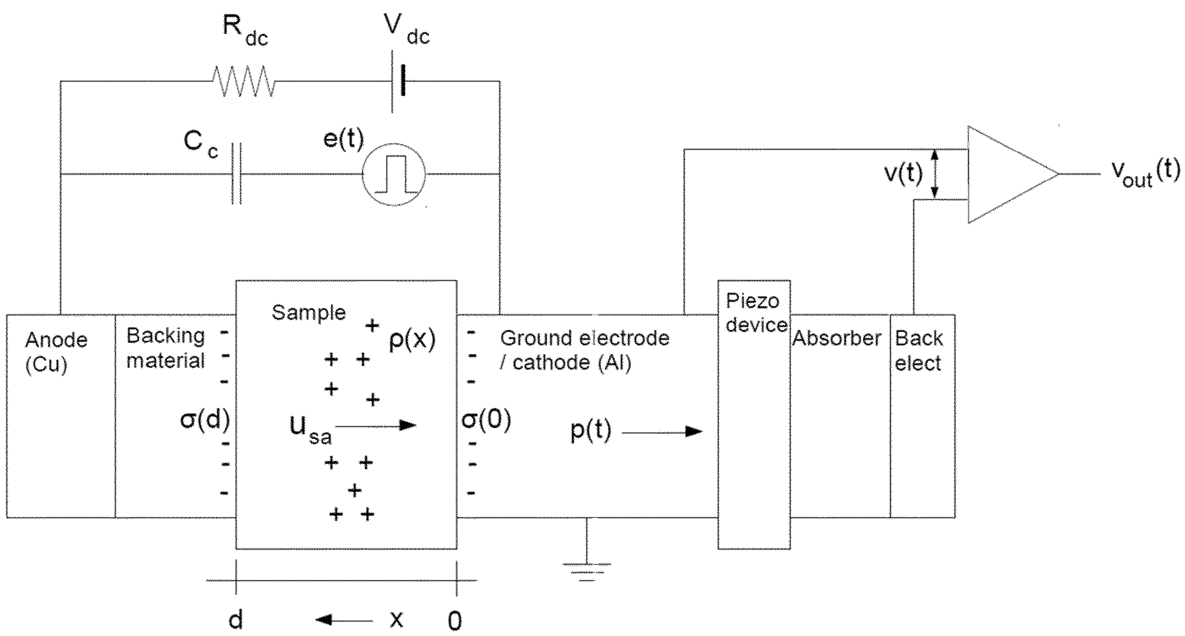


Schematic PEA test configuration

Figure 8

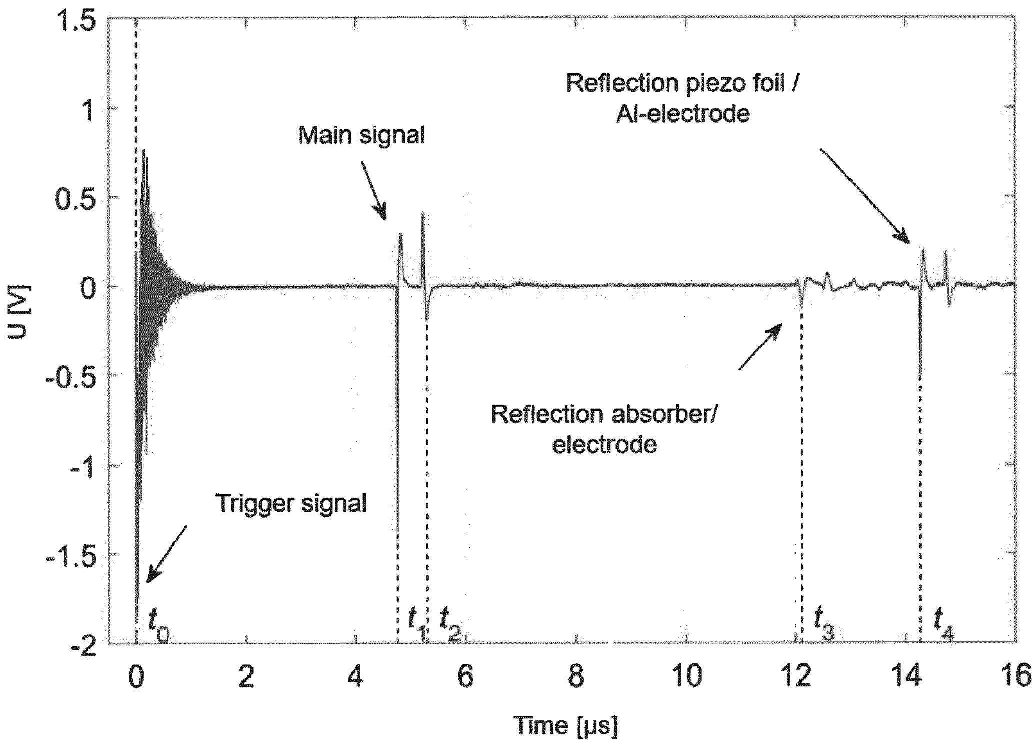


Oscillogram of a PEA measurement

Figure 9

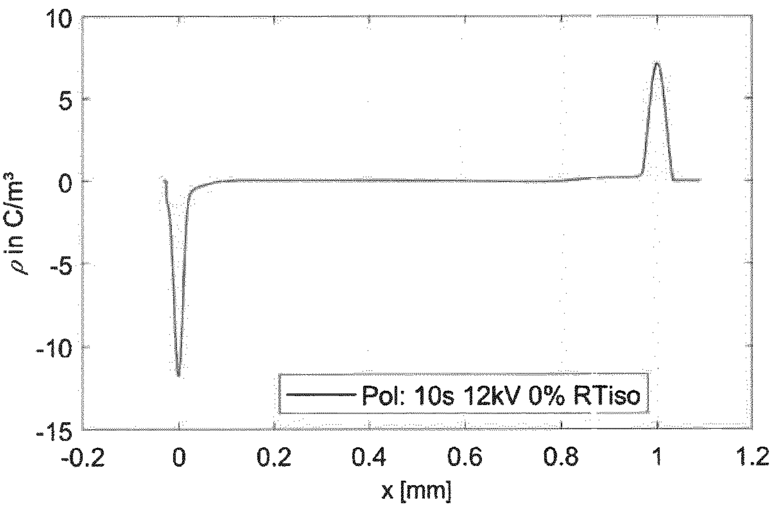


Transformation of a voltage oscillogram to a charge density diagram

**Figure 10**

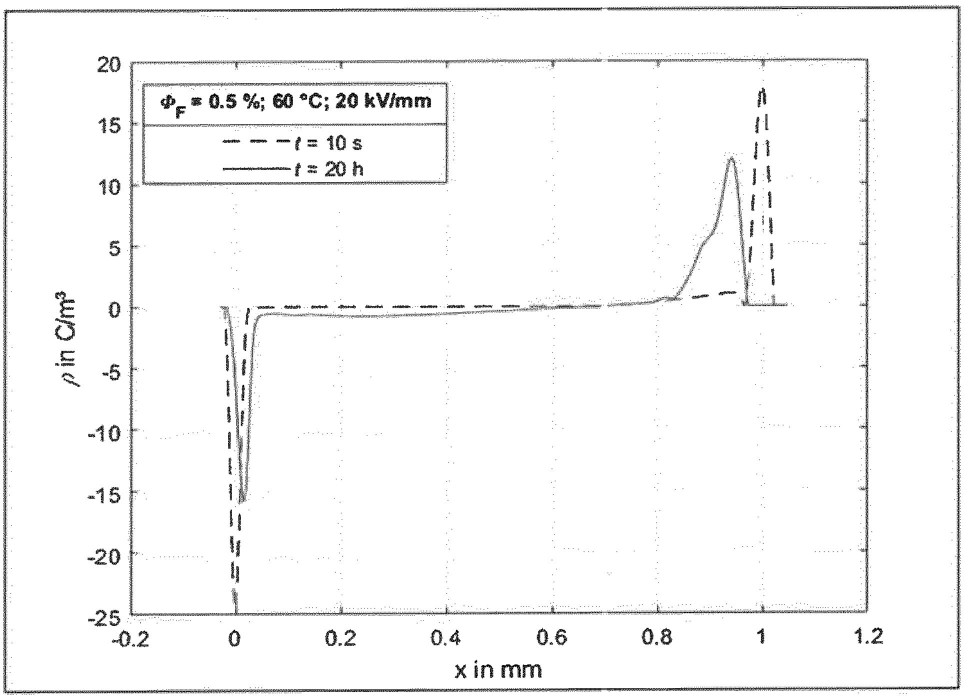


PEA charge movement diagram for the comparative example of the cured silicone composition SR1 (60°C)

**Figure 11**

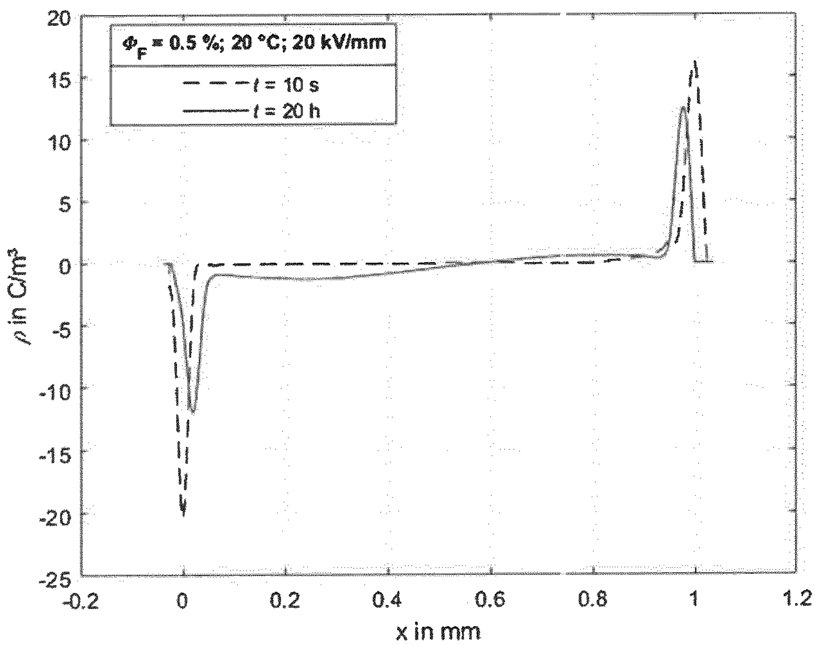


PEA charge movement diagram for the comparative example of the cured silicone composition SR1 (20°C)

**Figure 12**

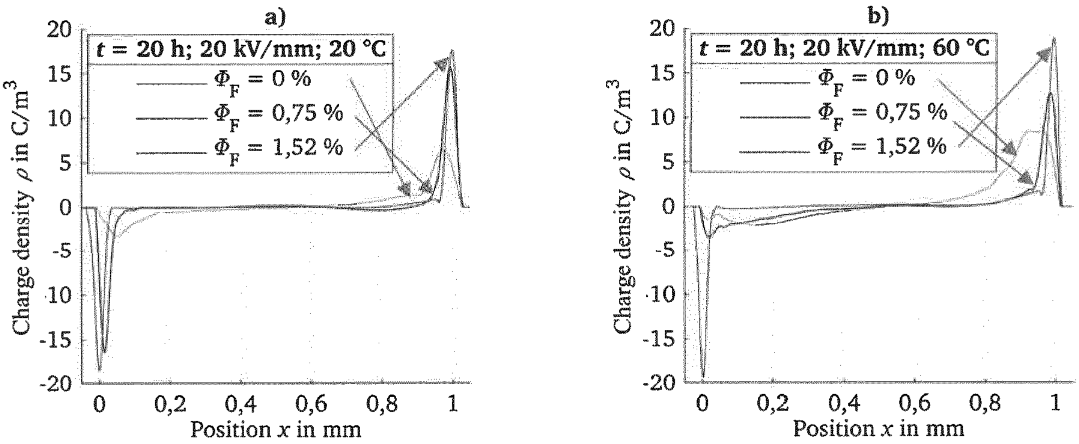


PEA charge movement diagrams of the cured inventive example SR1 (1.52 % CB as described in Ex. 1), a cured inventive example with a CB-content of 0.75 wt-% and of a non-CB filled cured composition (0 wt.-% CB) at 20°C and 60°C and a polarization time of t =20 h.

**Figure 13**

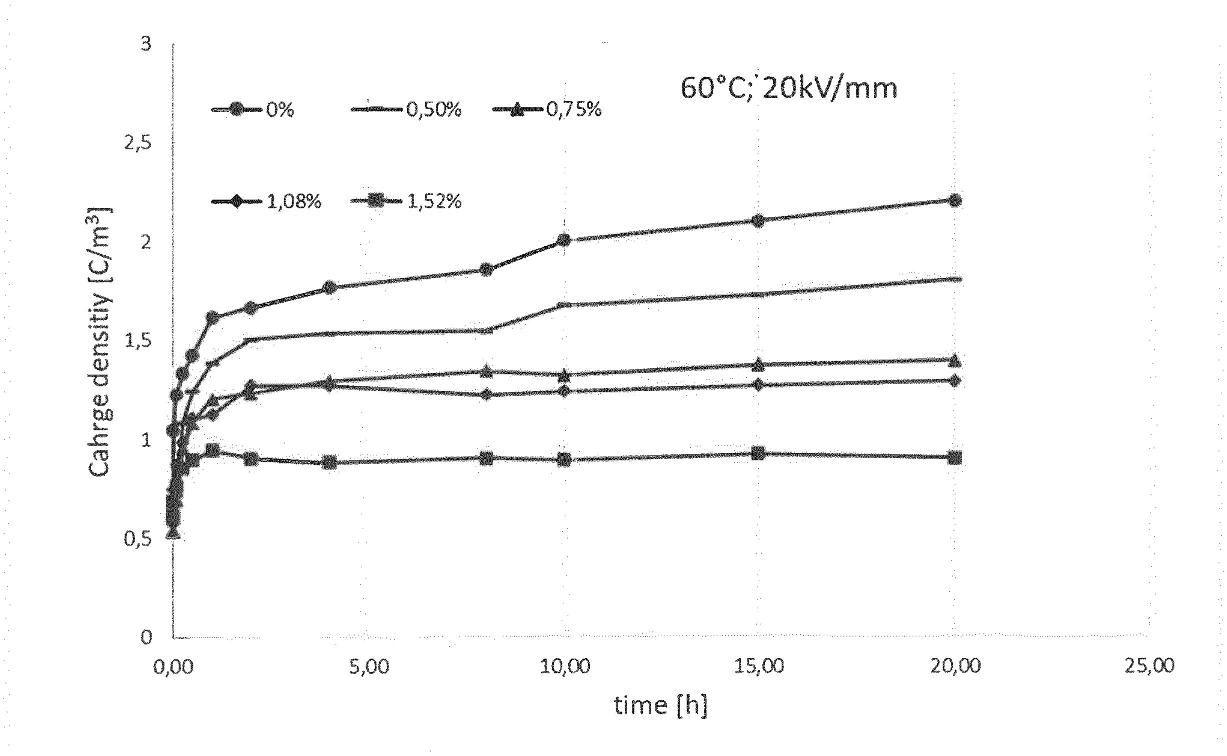


Total charge accumulation diagram of cured silicone compositions

Figure 14

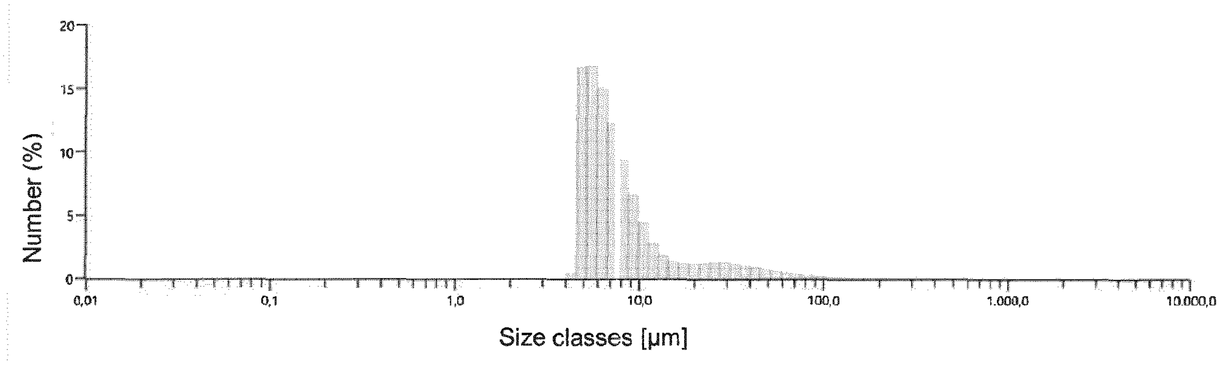


Particle size distribution of the Masterbatch Comparative Example 1

Figure 15

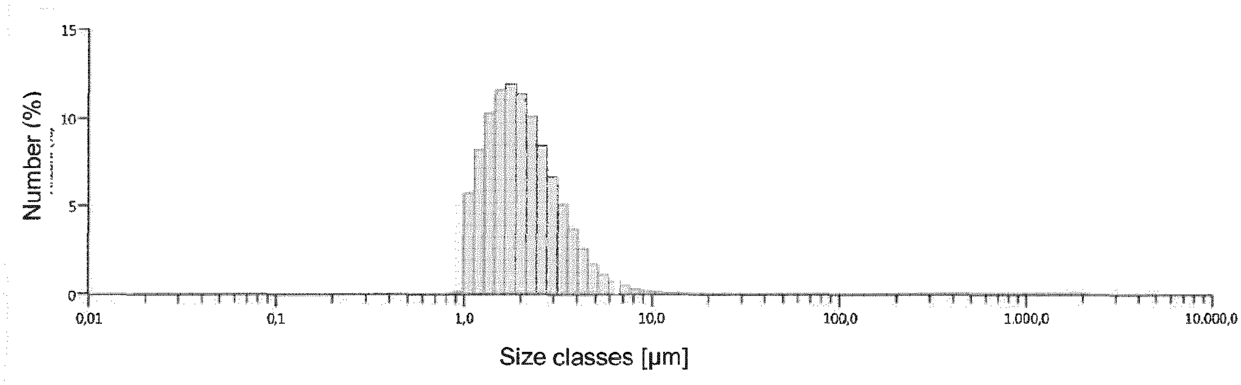


Particle size distribution of the Masterbatch Example 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20170372815 A1
- WO 2016110570 A
- US 2004138370 A1
- WO 2020063799 A1
- WO 2009027133 A2
- WO 2009027133 A
- US 5109095 A
- US 3159601 A
- US 3159662 A
- US 3419593 A
- US 3715334 A
- US 3775452 A
- US 3814730 A
- US 4530879 A
- US 20030199603 A
- US 4640939 A
- EP 1672031 A1


### Non-patent literature cited in the description


- The Analytical Chemistry of Silicones. Chemical Analysis. J. Wiley & Sons, 1991, vol. 112, 356
- *CHEMICAL ABSTRACTS*, 1333-86-4
- **LEWIS** ; **COLBORN** ; **GRADE** ; **BRYANT** ; **SUMPTER** ; **SCOTT**. *Organometallics*, 1995, vol. 14, 2202-2213
- **R. HUSSAIN** ; **J. MOXTER** ; **V. HINRICHSEN**. Development and optimization of a Pulsed Electroacoustic system suitable for silicone rubbers with carbon black nanofillers. *10th International conference on insulated power cables*, 2019
- **R. HUSSAIN** ; **V. HINRICHSEN**. Development and Optimization of a Pulsed Electroacoustic System with Temperature Controlled Electrodes. *26th Nordic Insulation Symposium on Materials, Components and Diagnostics*, 2019
- **G.C. MONTANARI** ; **D. FABIANI**. Evaluation of DC insulation performance based on spacecharge measurements and accelerated life tests. *IEEE Transactions on Dielectrics and Electrical Insulation*, June 2000, vol. 7 (3), 322-328
- Antti Penttinen DESIGN OF PULSED ELECTROACOUSTIC MEASUREMENT SYSTEM FOR SPACE CHARGE CHARACTERISATION. Master Thesis. Lappeenranta University of Technology, 2012
- **R. HUSSAIN**. Electrical Characterization of Liquid Silicone Rubber with Carbon Black Nanofiller for HVDC Cable Accessories. *PhD thesis*, 2020